(19) Europäisches Patentamt
European Patent Office
Office européen des brevets

(11) **EP 3 325 993 B1**

(12) **EUROPEAN PATENT SPECIFICATION**

(45) Date of publication and mention
of the grant of the patent:
**26.05.2021 Bulletin 2021/21**

(21) Application number: **16827356.3**

(22) Date of filing: **07.07.2016**

(51) Int Cl.:
*G01S 5/00* *(2006.01)*          *G01S 3/04* *(2006.01)*

(86) International application number:
**PCT/IL2016/050733**

(87) International publication number:
**WO 2017/013641 (26.01.2017 Gazette 2017/04)**

(54) **SYSTEM AND METHOD FOR IDENTIFYING THE LOCATION OF AN EMITTER IN AN IMAGE**

SYSTEM UND VERFAHREN ZUR IDENTIFIZIERUNG DES ORTES EINES EMITTERS AUF EINEM BILD

SYSTÈME ET PROCÉDÉ D'IDENTIFICATION DE L'EMPLACEMENT D'UN ÉMETTEUR DANS UNE IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2015 IL 24002115**

(43) Date of publication of application:
**30.05.2018 Bulletin 2018/22**

(73) Proprietor: **Elbit Systems EW And Sigint - Elisra Ltd.**
**5121701 Bnei Brak (IL)**

(72) Inventors:
• **MAOR, Amnon Menashe**
**5121701 Bnei Brak (IL)**
• **GILADY, Yuval**
**5121701 Bnei Brak (IL)**

(74) Representative: **Beck Greener LLP**
**Fulwood House**
**12 Fulwood Place**
**London WC1V 6HR (GB)**

(56) References cited:
EP-A2- 2 696 213          WO-A1-2011/158233
WO-A1-2015/075720          JP-A- 2007 019 828
US-A- 4 385 301          US-A1- 2011 273 722

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE DISCLOSED TECHNIQUE**

The disclosed technique relates to direction finding in general, and to systems and methods for identifying the location of an emitter in an image, in particular.

**BACKGROUND OF THE DISCLOSED TECHNIQUE**

Systems for determining the Direction Of Arrival (DOA) of a signal wavefront (e.g., an electromagnetic signal, or an audio signal) emitted by a signal emitter are known in the art. A signal emitter is referred to herein as a device, which generates (i.e., a source) or reflects signal wavefront. The signal waterfront emitted by a signal emitter is also referred to herein as 'source signal'. One application of determining the DOA of a source signal is, for example, determining the location of an emitter (e.g., a RADAR system, a radio transmitter, a sound source). Another exemplary application is determining the location of a wireless transmitting node in a network (e.g., a cellular telephone or a node in an ad hoc network).

A known in the art technique used to determine the DOA of a source signal is to determine the phase difference between signals received by at least two receptors adapted to receive the source signal and transforms the source signal to an electric received signal (e.g., antennas or microphones). In the two-dimensional (2D) case, a DOA determining system employs at least two receptors and measures the difference in the phase between the signal received by one receptor, relative to the signal received by the other receptor. Further in the 2D case, a DOA determining system determines only one of the azimuth or the elevation of the signal emitter. In the three-dimensional (3D) case, a DOA determining system employs at least three receptors (i.e., which are not located on the same line), and measures the difference in the phases between the source signal received by at least two pairs of receptor. Further in the 3D case, a radio DOA determining system may determine both azimuth and elevation of the radio emitter.

The difference in phase between the received signal of in one receptor and the received signal by another receptor relates to the DOA of the signal (i.e., the direction at which the signal emitter is located) as follows:

$$\Delta\phi = \left(2\pi d \middle/ \lambda\right) sin\theta \qquad (1)$$

where $\Delta\Phi$ represents the difference in phase between the signal received by the two receptors, $d$ represents the relative distance between the two receptors, $\lambda$ represents the wavelength of the source signal and 0 represents the DOA of the source signal (e.g., either azimuth or elevation). Equation (1) has a single solution as long as the relative distance $d$, between receptor 12 and receptor 14, is smaller or equal to half the wavelength of the signal (i.e., $d \leq \lambda/2$).

The publication to Schikora et al, entitled "Airborne Emitter Tracking by Fusing Heterogeneous Bearing Data", directs to a system for tracking an unknown number of emitters by fusing optical bearing data and bearing data obtained from an antenna array for tracking an emitter from the air. To that end, the system directed to by Schikora et al determines the actual direction (i.e., azimuth and elevation) of the emitters in a global coordinate according to an image of the area in which the emitter is located. To that end, the system directed to by Schikora et al transforms the bearing data obtained from the imager to bearing data in the global coordinate system. Similarly, the system directed to by Schikora et al transforms the bearing data obtained from the antenna array to bearing data in the global coordinate system. The system then fuses the bearing data and associates the bearing data with respective emitters based on the frequency of the emitters, and localization results along with the accuracy of the sensors.

P.C.T Application Publication 2011/158233 to Maor directs to a method and a system for determining the location properties of an emitter that transmits pulse trains. The location properties are related to the timing characteristics of the received pulse trains. These timing characteristics are either a characteristic TOA-phase or the characteristic TOA-phase curve. Furthermore, the timing characteristics may further be determined according to either TOA-phase, or characteristic TOA-phase curve or both. According to Maor, 'location properties' relate to the actual location of the emitter, a set of possible locations of the emitter relative to a reference coordinate system, motion properties of the emitter (e.g., relative motion between the emitter and the receivers or a set of possible trajectories of the emitter). The system directed to by Maor, includes at least two receivers, each receives a plurality of repetitive pulses or repetitive pulse trains emitted by the emitter. The TOA of the received pulse trains are recorded and the pulse train repetition interval (PTRI) is determined. Thereafter, the TOA-phase of each received pulse train is determined, according to the TOA of each pulse train and the PTRI. The TOA-phase is determined according to the residue of the division of the TOA of the pulse trains by the number of PTRI's counted from the start of reception of the pulse trains. In other words, the time axis is wrapped according to the PTRI's and the TOA-phases are determined according to the TOA of the pulse trains on the wrapped time axis. Thereafter a characteristic TOA-phase of the pulse trains is determined, according to the TOA-phases of the pulse trains respective of each receiver. The location properties of the emitter are determined according to the characteristic TOA-phase respective of the receivers.

P.C.T Application Publication 2011/158233 to Ben-Yishai et al directs to a medical Wide Field Of View (WFOV) optical tracking system for determining the position and orientation of at least one target object in a reference coordinate system. The system directed to by Ben-Yishai et al includes a light emitter attached to a target object and two two light emitters attached to a display. Two WFOV optical detectors attached to the target object. Of the WFOV optical detectors is selected to be an active WFOV optical detector which acquires at least one image of the two light emitters attached to the display (i.e., when the two light emitters attached to the display are within the field of view thereof). Each WFOV optical detector includes an optical sensor and at least two optical receptors, optically coupled with the optical sensor. Another optical detector is attached to the display, and acquires at least one image of the light emitter attached to the target object. A processor wirelessly coupled with the WFOV optical detectors and with the other optical detector determines the position and orientation of each target object in the reference coordinate system, according to representations of light emitters in images acquired by the optical detectors. The processor further renders one of navigational information, a real-time image, a model of a region of interest of the patient and a representation associated with the medical tool, according to the determined position and orientation of the target object. The display displays to a physician rendered navigational information, a real-time image, a model of region of interest of the patient or a representation associated with the medical tool, at a position and orientation corresponding to the determined position and orientation of the target object.

EP Patent Application Publication 2 696 213 to Oakley et al, entitled "Real-time RF signal visualization device", directs to a system and method for locating RF sources and providing a display with the source location indicated thereon. In the system and method directed to by Oakley et al, antenna elements and receivers detect and decode RF signals and provide phase/amplitude data to the direction of arrival processing block. The direction of arrival processing block determines the direction or directions (i.e., azimuth and elevation angles) with respect to the center line of antenna array. Also, a video camera provides a view of the observation direction. A computer correlates the image of the video camera with the direction of arrival the RF signals, and provides to a display, a view of the observed scene with indicators showing the location from which an RF source or sources are transmitting from.

## SUMMARY OF THE PRESENT DISCLOSED TECHNIQUE

According to a first aspect of the present invention, there is provided a system for identifying the location of an emitter in an image, said emitter emitting a signal, said system comprising: a receptor array, including at least three receptors said at least three receptors (associated with a plane, each one of said at least three receptors) receiving said signal and producing a respective received signal; an imager, including an imaging sensor, said imaging sensor includes a plurality of pixels, each pixel being associated with a pixel unique identifier, said imager being at a fixed spatial relationship relative to said receptor array, the field of view of said imager and the field of view of said receptor array at least partially overlap one with respect to the other; a multi-channel receiver, each receptor being coupled with a respective channel in said multi-channel receiver, said multi-channel receiver at least including a correlator, said correlator determining inter-receptor characteristic models based on received signals at pairs of receptors; and a processor, coupled with said multi-channel receiver and with said imager, said processor determining a received signals characteristic model from said inter-receptor characteristic models, said system further being characterized by said processor further determining a pixel corresponding to the location of said emitter in said image according to a signal-to-pixel correspondence model optimizing an array-to-imager correspondence model, said array-to-imager correspondence model incorporating said received signals characteristic model and said signal-to-pixel correspondence model, wherein said optimizing comprises determining arguments of the maxima or minima of a function incorporating said received signals characteristic model and said signal-to-pixel correspondence model, and wherein said signal-to-pixel correspondence model being pre-determined by a calibration process or computationally.

According to a second aspect of the present invention, there is provided a method for identifying an emitter in an image, said emitter emitting a signal, said method comprising the procedures of: acquiring by an imager an image of a scene, said emitter being located in said scene, the imager includes an imaging sensor, said imaging sensor includes a plurality of pixels, each pixel being associated with a pixel unique identifier, said imager being at a fixed spatial relationship relative to a receptor array, the field of view of said imager and the field of view of said receptor array at least partially overlap one with respect to the other; receiving by a receptor array a signal emitted by said emitter, the receptor array includes at least three receptors for receiving said signal and producing a respective received signal; determining inter-receptor characteristic models from the received signals based on received signals at pairs of receptors; determining a received signals characteristic model from said inter-receptor characteristic models, being characterized in that said method further includes the procedure of: determining a pixel corresponding to said emitter according to a signal-to-pixel correspondence model optimizing an array-to-imager correspondence model, said array-to-imager correspondence model incorporating said received signals characteristic model and said signal-to-pixel correspondence model, wherein said optimizing comprises determining arguments of the maxima or minima of a function incorporating said received signals characteristic model and said signal-to-pixel correspondence model, and wherein said signal-to-pixel correspondence model being pre-determined by a calibration process or computationally.

It is an object of the disclosed technique to provide a novel method and system for identifying the location of an emitter in an i image as defined by the appended claims.

## BRIEF DESCRIPTION OF THE DRAWINGS

The disclosed technique will be understood and appreciated more fully from the following detailed description taken in conjunction with the drawings in which:

Figure 1 is a schematic illustration of a system for marking an emitter location on an image, constructed and operative in accordance with an embodiment of the disclosed technique;

Figure 2 is a schematic illustration of an exemplary imaging sensor including a matrix of pixels, in accordance with another embodiment of the disclosed technique;

Figure 3A is a schematic illustration of a correspondence between horizontal and vertical phase differences to a respective pixel number, in accordance with a further embodiment of the disclosed technique;

Figure 3B is a schematic illustration of a correspondence between azimuth phase differences to a respective horizontal pixel coordinates, in accordance with a further embodiment of the disclosed technique;

Figure 3C is a schematic illustration of a correspondence between elevation phase differences to respective vertical pixel coordinates, in accordance with a further embodiment of the disclosed technique;

Figure 4 is a schematic illustration of a method for identifying an emitter in an image, operative in accordance with another embodiment of the disclosed technique;

Figure 5 is a schematic illustration of a method for marking an emitter location on an image when employing correlation-based techniques, in accordance with a further embodiment of the disclosed technique;

Figure 6 is a schematic illustration of a method for marking an emitter location on an image when the interferometer technique is employed, in accordance with another embodiment of the disclosed technique; and

Figure 7 is a schematic illustration of a method for determining a signal-to-pixel correspondence model in accordance with a further embodiment of the disclosed technique.

## DETAILED DESCRIPTION OF THE EMBODIMENTS

The disclosed technique overcomes the disadvantages of the prior art by providing a system and a method for identifying the location of an emitter in an image of a scene in which the emitter is situated, without determining the DOA of the source signal. Thus, the need determined the DOA of the emitter, and to convert the DOA to pixel coordinates is alleviated, as well as inaccuracies resulting from these conversions (e.g., terrain map errors or optical errors). The system includes a receptors array (e.g., an antenna array or a microphone array) and an imager. The spatial relation of the imager and the receptor array is fixed one with respect to the other (i.e., the receptor array and the imager do not move one with respect to the other) at least during the acquisition of the image and the reception of the emitted signal. Furthermore, the Filed Of View (FOV) of the receptor array at least partially overlaps with the FOV of the imager. The imager includes an imaging sensor, which includes a plurality of pixels. Each pixel is associated with a respective unique identifier such as horizontal pixel coordinate and a respective vertical pixel coordinate or a pixel number. The receptor array includes at least three receptors. Each receptor receives a source signal and produces a respective received signal. The system further includes multi-channel receiver, which includes a respective channel for each receptor and a correlator. The processor determines the pixel in an acquired image of the scene, which corresponds to the location of the emitter (i.e., the location of the emitter in the acquired image), without determining the DOA of the source signal, according to measurements of phase differences between signals received by selected pairs of receptors, referred to herein as 'the interferometer technique'. Alternatively, the processor determines the pixel corresponding to the location of the emitter in the acquired image of the scene (i.e., without determining the DOA of the emitter) according to according to correlation-based techniques (e.g., beamforming, the Multiple Signal Classification - MUSIC and the like). The processor may mark the image pixel (or group of pixels) corresponding to the location of the emitter in the image. Thus, the marked image serves as an output for the receptor array instead of, for example, a numeric representation of the direction in which the emitter is located.

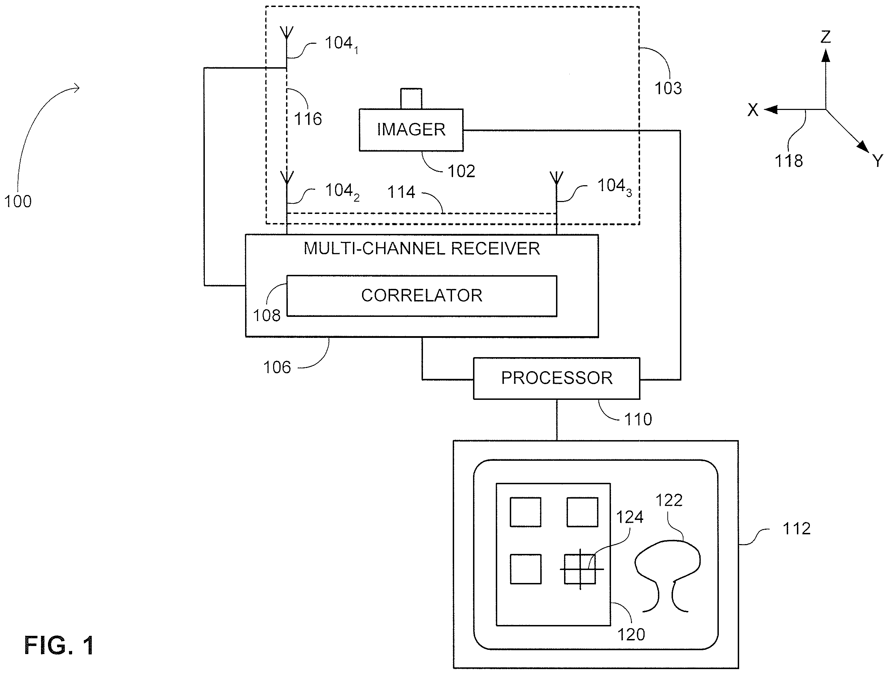

Reference is now made to Figure 1, which is a schematic illustration of a system, generally referenced 100, for identifying an emitter in an image, constructed and operative in accordance with an embodiment of the disclosed technique. System 100 includes an imager 102, a receptor array, which includes at least three receptors $104_1$, $104_2$ and $104_3$, a multi-channel receiver 106, a processor 110 and a display 112. Multi-channel receiver 106 at least includes a correlator 108. Processor 110 is coupled with imager 102, with multi-channel receiver 106 and with display 112. Multi-channel receiver 106 is further coupled with each one of receptors $104_1$, $104_2$ and $104_3$. It is noted that Multi-channel receiver 106 may also be implemented with three separate receivers, each coupled with a respective one of receptors $104_1$, $104_2$ and $104_3$ and a separate correlator, coupled with the three separate receivers, as long as these receivers and correlator are coherent (i.e., synchronized samplers clocks) and synchronized with respect to their output. In other words, the received signals produced by multi-channel receiver 106 are coherent. In addition, multi-channel receiver 106 and correlator 108, along with processor 110 may all be implemented on a digital signal processor (DSP).

Imager 102 includes an imaging sensor (e.g., Charge Coupled Device - CCD sensor or a Complimentary Metal Oxide Semiconductor - CMOS sensor), which includes an array of pixels. Each pixel is associated with a unique identifier (e.g., a respective horizontal and vertical pixel coordinates or a pixel number) as further explained below. Receptors $104_1$, $104_2$ and $104_3$ may be antennas for receiving electromagnetic radiation or sound sensors (e.g., microphones) for receiving sound waves.

The receptor array and imager 102 are at a fixed spatial relation one with respect to the other (i.e., the receptor array and the imager do not move one with respect to the other) at lease during the acquisition of the image and the reception of the emitted signal. The receptor array and imager 102 are also referred to herein as detection module 103. The field of view of imager 102 at least partially overlaps with the field of view of the receptor array. In addition, each pair of receptors (i.e., $104_1$ and $104_2$, $104_1$ and $104_3$ and $104_2$, and $104_3$) defines a baseline.

Imager 102 acquires an image of a scene, which includes, for example, a building 120 and a tree 122. Each one of receptors $104_1$, $104_2$ and $104_3$ receives a signal originating from an emitter (not shown) located in the scene and produced a respective received signal (i.e., an electrical signal). As mentioned above, the emitter may be a radio emitter emitting electromagnetic radiation or a sound emitter emitting sound waves. Each one of receptors $104_1$, $104_2$ and $104_3$ provides the respective received signal produced thereby to multi-channel receiver 106. Multi-channel receiver 106 receives the received signals from receptors $104_1$, $104_2$ and $104_3$ and performs substantially identical reception operations on each of the received signals. These reception operations include, for example, down conversion, filtering, sampling and the like. Multi-channel receiver 106 produces, for example, a complex representation of the received signal (e.g., in-phase and quadrature signals or samples of the in-phase and quadrature signals) from each receptor $104_1$, $104_2$ and $104_3$. Correlator 108 determines inter-receptor characteristic models. These inter-receptor characteristic models are, for example, the correlations between received signals from each pair of receptors $104_1$, $104_2$ and $104_3$ and with each received signal with itself, or the phase difference measurement between pairs of receivers. Processor 110 determines a received signals characteristic model from the inter-receptor characteristic models. The received signals characteristic model is, for example, a covariance matrix or a vector of phase difference measurements. Processor 110 determines the pixel corresponding to the emitter location in the image, according to the signal-to-pixel correspondence model optimizing an array-to-imager correspondence model. The array-to-imager correspondence model incorporates the received signals characteristic model and the signal-to-pixel correspondence model. A signal-to-pixel correspondence model is a respective steering vector or respective phase difference measurements associated with each of at least one pixel (i.e., each pixel or group of pixels). The array-to-imager correspondence model "links" the signals received by the array and the pixels. Thus, processor 110 determines the pixel (e.g., pixel coordinates or pixel number) corresponding to the location of the emitter in the acquired image without determining the direction from which the signal was received.

Following is a description relating to the Correlation-based techniques. As mention above, and with reference to Figure 1, processor 110 may employ correlation-based techniques such as the beamforming or MUSIC algorithms to determine the pixel corresponding to the location of the emitter in the image (i.e., identifies the emitter in the image). In both cases, the signal-to-pixel correspondence model is a steering vector. Thus, each pixel or a group of pixels is associated with a respective steering vector as follows:

$$\overline{w}_{x,y} = \begin{bmatrix} a_1 e^{j\theta_1} \\ a_2 e^{j\theta_2} \\ a_3 e^{j\theta_3} \\ \vdots \\ a_N e^{j\theta_N} \end{bmatrix} \quad (2)$$

where N is the number of receptor (e.g., the number of antennal or the number of microphones), $a_i e^{j\theta i}$ is the complex representation (i.e., amplitude and phase) of the signal received by the $i^{th}$ receptor relative to a reference signal, when a calibration emitter is located a the direction corresponding to the pixel coordinates. When the signal received by the $i^{th}$ receptors is employed as the reference signal than $a_i e^{j\theta i}=1$. The steering vectors $\overline{w}_{x,y}$ are determined by a calibration process or computationally as further elaborated below.

After multi-channel receiver 106 receives the received signals from receptors $104_1$, $104_2$ and $104_3$, correlator 106 correlates received signals to determine inter-receptor characteristic models. In the correlation-based technique, the inter-receptor characteristic models are the correlations between the signals received by each pair of receptors $104_1$, $104_2$ and $104_3$, and the correlation between the signal received by each receptor with itself as follows:

$$rr_{i,j} = \overline{r}_i \overline{r}_j^T \qquad (3)$$

were $\overline{r}_i$ denotes the signal received by the $i^{th}$ receptor, $\overline{r}_j$ denotes the signal received by the $j^{th}$ receptor and $T$ denotes the transpose operator. Correlator 106 provides results of the correlations to processor 110. Processor 110 then determines a received signals characteristic model from the inter-receptor characteristic models. In the correlation-based techniques, the received signals characteristic model is a covariance matrix, for example, as follows:

$$R = \frac{1}{N} \begin{bmatrix} rr_{11} & rr_{12} & rr_{13} & \cdots & rr_{1N} \\ rr_{21} & rr_{22} & rr_{23} & \cdots & rr_{2N} \\ rr_{31} & rr_{32} & rr_{33} & \cdots & rr_{3N} \\ \vdots & \vdots & \vdots & \ddots & \vdots \\ rr_{N1} & rr_{N2} & rr_{N3} & \cdots & rr_{NN} \end{bmatrix} \qquad (4)$$

where N denotes the 'length' of the received signal (i.e., either the number of samples in the discrete case or the time duration in the continuous case).

As mentioned above, processor 110 identifies the pixel corresponding to the location of the emitter in the image according to the signal-to-pixel correspondence model, which optimizes an array-to-imager correspondence model. According to the beamforming algorithm, processor 110 determines the pixel or group of pixels (i.e., the pixels coordinates or the pixel number) with the respective steering vector, which maximizes the power in the received signal. According to the beamforming algorithm, processor 110 optimizes the following array-to-imager correspondence model:

$$[\,x,y\,] = \underset{x,y}{arg\,max}\,[\overline{w}_{x,y}^T R \overline{w}_{x,y}\,] \qquad (5).$$

$\overline{w}$, R and $T$ are as defined above.

According to the MUSIC algorithm, processor 110 performs eigen decomposition to determine the eigen values and the eigen vectors of the covariance matrix $R$. Processor 110 the determines $K$ eigen vectors corresponding to the $K$ smallest eigen values (i.e., the $K$ eigen values that correspond to noise). Processor 110 determines the $D$ pixels or groups of pixels (i.e., the pixel coordinates) corresponding to the signal received from $D$ emitters, which optimize the following array-to-imager correspondence model:

$$[\,x,y\,]_1^D = \underset{x,y}{arg\,max}\left[\frac{1}{\overline{w}_{x,y}^T V_N V_N^T \overline{w}_{x,y}}\right] \qquad (6)$$

where $V_N$ represent the $K$ eigen vectors of the covariance matrix, $R$, relating to the noise and $K+D$ equals the total number of eigen values of the covariance matrix, $R$ and vectors and $\overline{w}$ and $T$ are as defined above.

As mentioned above, not every pixels needs to be associated with a respective steering vector $\overline{w}_{x,y}$. In case the angular resolution of the imaging sensor is higher than the minimum detectable angular difference of the receptor array, than each group of pixels (e.g., a group 2, 4 or 9 pixels) may be associated with a corresponding steering vector $\overline{w}_{x,y}$. In such a case, the pixel coordinates or unique identifier of such a group of pixel may be, for example, the pixel coordinates or unique identifier of a selected one of the pixels in the group.

In the description above, the beamforming technique and the MUSIC technique are brought examples to the correlation based techniques. Additional correlation based techniques may also be employed. To that end, the array-to-imager correspondence model relating to this technique should be employed. As a further example, the Capon-Minimum Variance Distortionless Response (MVDR) may be employed. To that end, the array-to-imager correspondence model relating to this technique is as follows:

$$[\,x,y\,]_1^D = \underset{x,y}{arg\ max}\left[\frac{1}{\overline{w}_{x,y}^T R^{-1} \overline{w}_{x,y}}\right] \qquad (7)$$

Following is a description relating to the interferometer technique. According to the interferometer technique, at least two phase difference measurements are employed between the signals received by respective at least two pairs of receptors. Nevertheless, more than two phase difference measurements may also be employed. When, for example, two pairs of receptors are employed (i.e., two baselines), one pair of receptors $104_1$, $104_2$ and $104_3$ is selected as the first pair of receptors and the baseline defined thereby is the first baseline. Another pair of receptors $104_1$, $104_2$ and $104_3$ is selected as the second pair of receptors and the baseline defined thereby is the second baseline. For example, in Figure 1, receptors $104_2$, and $104_3$ are selected as the first pair of receptors and define the first baseline 114. Receptors $104_1$ and $104_2$ are selected as the second pair of receptors and define the second baseline 116. It is noted that although first baseline 114 and second baseline 116 are depicted in Figure 1 as being substantially orthogonal, that is not generally a requirement. It is sufficient that receptors $104_1$, $104_2$ and $104_3$ are not located on the same line. It is further noted that the relative position between receptors $104_1$, $104_2$ and $104_3$ need not be known (i.e., when array calibration, further explained below, is employed).

As mentioned above, each pixel or group of pixels is associated with a respective signal-to-pixel correspondence model. In the interferometer technique, the signal-to-pixel correspondence model is a vector of phase differences between selected pairs of receptors associated with each pixel or group of pixels as follows:

$$[\,\Delta\phi_1^{x,y}, \Delta\phi_2^{x,y}, \ldots, \Delta\phi_M^{x,y}\,] \qquad (7)$$

where $\Delta\phi_m^{x,y}$ denotes the $m^{th}$ model phase difference and determined by a calibration process as further explained below and M is the number of selected pairs of receptors (i.e., the selected number of baselines employed).

After multi-channel receiver 106 receives the received signals from receptors $104_1$, $104_2$ and $104_3$, correlator 106 correlates the received signals to determine inter-receptor characteristic models. In the interferometer technique, the inter-receptor characteristic models are received phase difference measurements between the selected pairs of receptors. When, two pairs of receptors are employed (i.e., two baselines), the inter-receptor characteristic models are a first phase difference, $\Delta\phi_1^r$ and a received second phase difference, $\Delta\phi_2^r$. The received first phase difference, $\Delta\phi_1^r$ is the phase difference between the received signals produced by the first pair of receptors (e.g., receptors $104_2$, and $104_3$). The received second phase difference, $\Delta\phi_2^r$, is the phase difference between the received signals produced by the second pair of receptors (e.g., receptors $104_1$ and $104_2$). Multi-channel receiver 106 provides these phase difference measurement to processor 110.

Processor 110 determines a received signals characteristic model from the inter-receptor characteristic models. In the interferometer technique, the received signals characteristic model is a vector of received phase differences between the selected pairs of antennas as follows:

$$[\,\Delta\phi_1^r, \Delta\phi_2^r, \ldots, \Delta\phi_M^r\,] \qquad (8)$$

where $\Delta\phi_m^r$ denotes the $m^{th}$ received phase difference and M is as above.

Processor 110 determines a pixel corresponding to the location of the emitter in the image according to the signal-to-pixel correspondence model optimizing an array-to-imager correspondence model. According to the interferometer technique, processor 110 determines the pixel or group of pixels with a corresponding signal-to-pixel correspondence model, which optimizes the following array-to-imager correspondence model:

$$[\,x,y\,] = \underset{x,y}{arg\ min}([\,\Delta\phi_1^r, \Delta\phi_2^r, \ldots, \Delta\phi_M^r\,] - [\,\Delta\phi_1^{x,y}, \Delta\phi_2^{x,y}, \ldots, \Delta\phi_M^{x,y}\,])^2 \quad (9)$$

Accordingly, system 100 does not need to determine the direction from which the signal was received. Furthermore, the relative position between receptors $104_1$, $104_2$ and $104_3$ need not be known when calibration is employed as further explained below.

In general, in both the correlation-based techniques and the interferometer technique, the direct correspondence between the received signals and the pixels (i.e., the signal-to-pixel correspondence models) alleviates errors resulting from non-ideal receptors, optical distortions. The direct correspondence between the received signals and the pixels also alleviates the need for a positioning system or for the fusion of data (e.g., the fusion of DOA and positioning information with image information).

After determining the pixel corresponding to the emitter (i.e., either by a correlation-base technique or by the interferometer technique), processor 110 may mark the corresponding pixel or group of pixels in the acquired image with an indicator 124 (e.g., a crosshairs, a circle or any other geometrical or arbitrary shape). Thus, the marked image serves as an output for the receptors array and a user can identify the location of the radio emitter in the scene according to location of indicator 124 in the image. In the image depicted in Figure 1, the emitter is located in building 120.

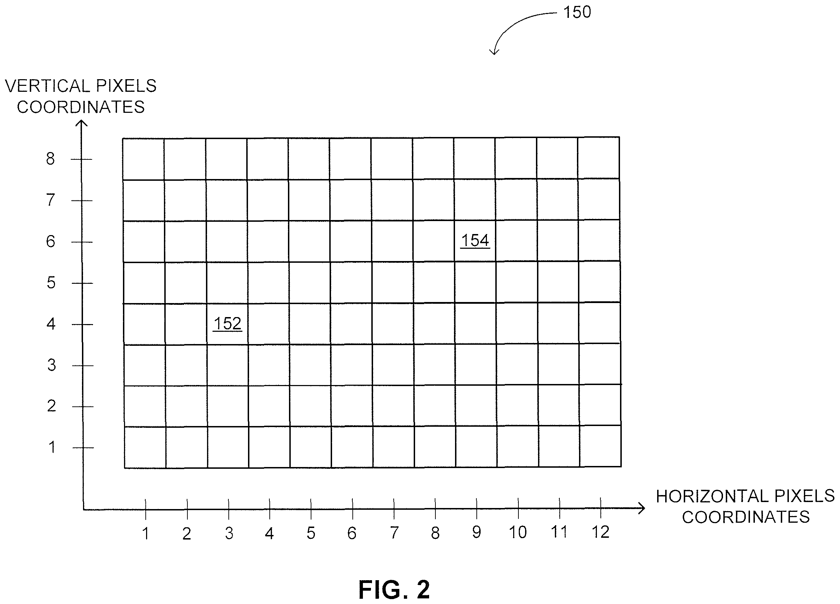

Reference is now made to Figure 2, which is a schematic illustration of an exemplary imaging sensor, generally reference 150, including a matrix of pixels such as pixel 152 and pixel 154, in accordance with another embodiment of the disclosed technique. Each pixel in imaging sensor 150 is associated with a respective unique identifier. For example, the pixel unique identifier is the respective horizontal pixel coordinate and a respective vertical pixel coordinate corresponding to the location of that pixel in the matrix. For example, pixel 152 is associated with horizontal pixel coordinate 3 and vertical pixel coordinate 4. Similarly, pixel 154 is associated with horizontal pixel coordinate 9 and vertical pixel coordinate 6. The pixel coordinates may be designated in an ordered pair. As such, pixel 152 is associated with pixel coordinates [3,4] and pixel 154 is associated with pixel coordinates [9,6]. Alternatively, each pixel may be associated with a pixel number, which uniquely identifies the pixel and the location thereof in the array. In the example brought forth in Figure 2, array 150 includes 96 pixels. Accordingly, each pixel is associated with a number between 1-96 counting from right to left and from bottom to top. Thus, pixel 152 is associated with the number 39 and pixel 154 is associated with the number 69. Furthermore, each pixel is also associated with a respective horizontal angle and vertical angle related to the pixel coordinates. (e.g., relative to the optical axis of the imaging sensor, which passes through the physical center of the imaging sensor and perpendicular to the imaging sensor plane). It is noted that imaging sensor 150 is brought herein as an example only for explanation purposes only. In general, the number pixels in imaging sensors may be between hundreds of pixels to tens of millions of pixels. Also, the notation '$x, y$' herein above and below relates, in general, to the pixel unique identifier and not just to the pixel coordinates.

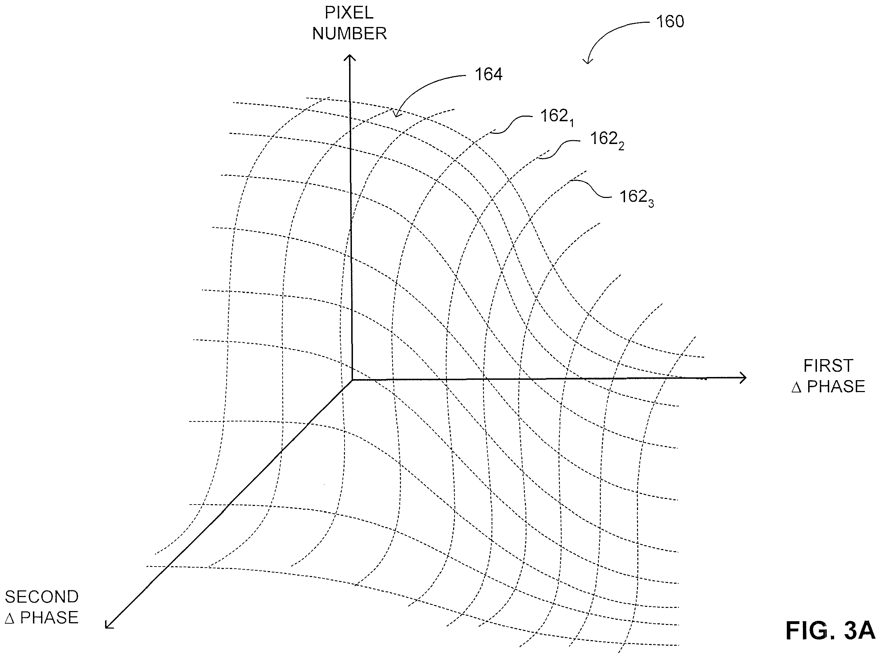

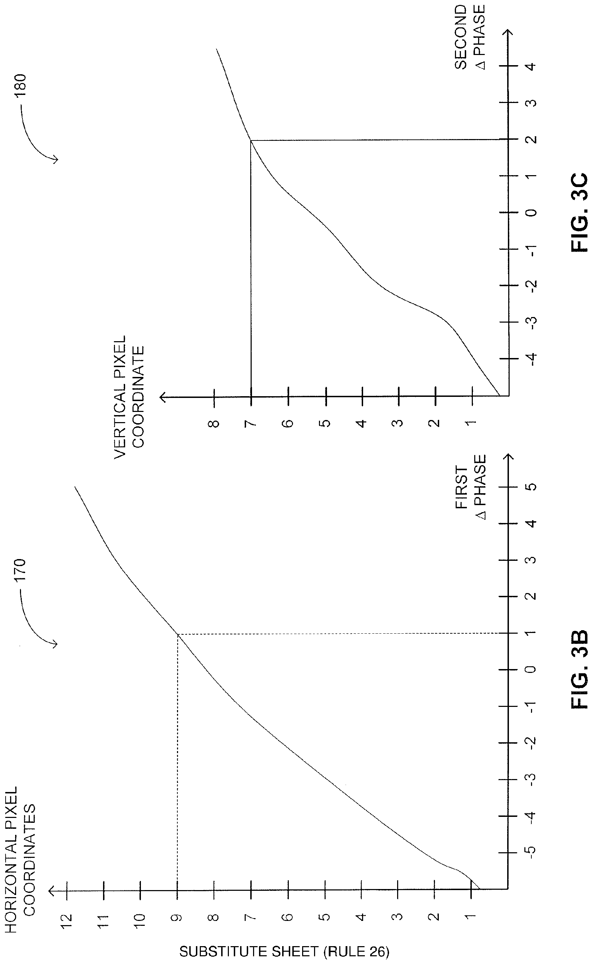

Reference is now made to Figures 3A, 3B and 3C. Figure 3A is a schematic illustration of a correspondence, generally referenced 160, between first and second phase differences to a respective pixel number, Figure 3B is a schematic illustration of a correspondence, generally referenced 170, between first phase differences to a respective horizontal pixel coordinates and Figure 3C is a schematic illustration of a correspondence, generally referenced 180, between second phase differences to respective vertical pixel coordinates, in accordance with a further embodiment of the disclosed technique. With reference to Figure 3A, each pair of first phase difference and second phase difference is associated with a respective pixel identified by a respective unique pixel number. In general, the azimuth of an emitter, as may be determined from the phase difference between the first pair of antennas, depends on the elevation of the emitter. In other words, more than one azimuth angle may be associated with the same first phase difference measurement (i.e., the phase difference measurement defines a cone about the horizontal base line). However, a single azimuth angle is associated with a phase difference measurement for a given elevation angle. Thus, each row of pixels, which corresponds to a second phase difference, is associated with a respective correspondence curve, such as curves $162_1$, $162_2$ and $162_3$, between horizontal phase difference and the pixel horizontal coordinates. This plurality of curves, which may be employed to determine a surface such as surface 164 in Figure 3A, define a correspondence between each pair of first and second phase differences to a respective pixel. Curves $162_1$, $162_2$ and $162_3$ and surface 164 are brought herein as examples only. Practical curves and surface may vary depending on various factors such as the mapping of the pixel numbers, relative position between receptors, the medium characteristics (e.g., changes in refractive index) and the like.

When the predicted elevation angle of the emitter is small, azimuth of the emitter may be approximated as independent from the elevation thereof. Thus, the correspondence between first phase differences and the horizontal pixel coordinates may be estimated independently from the elevation phase difference. With reference to Figure 3B, each first phase difference is associated with a respective horizontal pixel coordinate. For example, an azimuth phase difference of 1 is associated with horizontal pixel coordinate 9. With reference to Figure 3C, each second phase difference is associated with a respective vertical pixel coordinate. For example, a second phase difference of 2, is associated with vertical pixel coordinate 7. For example, similarly to as mentioned above and with reference to Figure 1, processor 110 determines the horizontal pixel coordinate and the vertical pixel coordinate corresponding to the direction (i.e., the azimuth direction and the elevation direction) in which the emitter is located, according to correspondence 160 between the first phase differences and horizontal pixel coordinates and correspondence 170 between the second phase differences and the vertical pixel coordinates.

Still referring to Figure 1, when the distance between receptors $104_1$, $104_2$ and $104_3$ increases, the accuracy of the detected phase difference between the signals received by each of pair of receptors also increases. However, positioning the receptors at a relative distance larger than half the wavelength of the radio signal may cause ambiguity in the detected phase difference between the received signals. This ambiguity occurs since, when placing the receptors at a relative distance greater than half the wavelength, the number of repetitions of the wavelength associated with the radio signal, within the relative distance between the receptors, is greater than one. However, the repetitive nature of the radio signal limits the measured phase difference (i.e., either the first phase difference, $\Delta\phi_1$, or the second phase difference, $\Delta\phi_2$) to be between 0 and $2\pi$ radians (i.e., to portions of a wavelength). Thus, when distance between the receptors is greater than half the wavelength, more than one wavelength repetitions may be associated with the same measured phase difference (i.e., the measured phase difference may include integer multiples of $2\pi$ radians). This is also referred to as the wrapping or folding of the phase difference measurement. Consequently, more than one image pixel may be associated with the same measured first and/or second phase differences. Processor 110 may mark all of these pixels. A user may resolve this ambiguity through observation and/or additional information. For example, the user may be informed that the emitter is located to the right of building 120.

The correspondence between each pixel or group of pixels, and the respective signal-to-pixel model is determined by a calibration process. Referring back to Figure 1, during this calibration process, a calibration emitter (not shown) and detection module 103 are positioned in a plurality of relative calibration directions therebetween. Positioning the calibration emitter and detection module 103 in a plurality of relative calibration directions therebetween is achieved by moving the either the calibration emitter or the system through a plurality of calibration locations relative to each other. Alternatively, positioning the calibration emitter and detection module 103 through a plurality of relative calibration directions therebetween is achieved by orienting detection module 103 though a plurality of calibration orientation relative to the calibration emitter. Furthermore, the calibration emitter is easily identifiable in an image or images acquired by imager 102. For example, the calibration emitter may be of a color, which exhibits a high contrast relative to the background. Alternatively, the emitter may be fitted with a light reflector (e.g., a reflection sphere) or a light emitter (e.g., Light Emitting Diode - LED).

For each relative calibration direction, imager 102 acquires an image of the calibration emitter. The location of the calibration emitter in the acquired image (i.e., the pixel coordinates or the pixel number) is determined either automatically (e.g., by processor 110 with the aid of image processing techniques) or by a user (e.g., with the aid of cursor).

For each calibration direction, each one of receptors $104_1$, $104_2$ and $104_3$ receives a signal originating from the calibration emitter. Each one of receptors $104_1$, $104_2$ and $104_3$ provides the respective received signal produced thereby to multi-channel receiver 106. Multi-channel receiver 106 receives the received signals from receptors $104_1$, $104_2$ and $104_3$. For each calibration direction, correlator 108 determines respective inter-receptor characteristic models according to the received signal and processor 110 determines a received signals characteristic model from the inter-receptor characteristic models. Processor 110, associates the determined pixel location of the calibration emitter with the received signals characteristic model corresponding to the same calibration direction.

When employing the interferometer technique, correlator 108 determines at least two calibration phase differences. When two pairs of receptors are employed, respective calibration first phase difference $\Delta\phi_{C1}$ between the signals received by the first pair of receptors and a respective calibration second phase difference $\Delta\phi_{C2}$ between the signals received by the vertical pair of receptors, which correspond to the current relative calibration direction of the calibration emitter. Multi-channel receiver 106 provides these phase difference measurements to processor 110. When employing correlation-based techniques, processor 110 determines a respective steering vector for each relative calibration direction by determining the complex signal received by each receptor relative to a reference signal.

Accordingly, when the interferometer technique is employed, for each calibration direction processor 110 determines a correspondence between the calibration phase differences (e.g., the first phase difference $\Delta\phi_{C1}$ and calibration second phase difference $\Delta\phi_{C1}$) and a the respective detected pixel. This correspondence may take the form of a Look-Up-Table (LUT). It is noted that there is no need for the number of calibration directions to correspond to the number of pixels or group of pixels. The number of calibration directions may be smaller then the number of pixels or group of pixels. In such a case, the phase difference measurements of the pixels or group of pixels that are not associated with a calibration direction may be determined by interpolation. Alternatively, processor 110 may fit a determined function (e.g., a polynomial of a selected degree) to the determined correspondences between the detected phase differences and pixels.

Similarly When correlation-based techniques are employed, processor 110 determines a correspondence between the steering vector determined for each calibration position of the calibration emitter and the determined pixel of the calibration emitter. As mentioned above, the steering vector is as follows:

$$\overline{w}_{x,y} = \begin{bmatrix} a_1 e^{j\theta_1} \\ a_2 e^{j\theta_2} \\ a_3 e^{j\theta_3} \\ \vdots \\ a_N e^{j\theta_N} \end{bmatrix} \qquad (8)$$

where N is the number of receptor (e.g., the number of antennas or the number of microphones), $a_i e^{j\theta_i}$ is the complex representation (i.e., amplitude and phase) of the signal received by the $i^{th}$ receptor relative to a reference signal, when a calibration emitter is located a the direction corresponding to the pixel coordinates.

Similar to as noted above, there is no need for the number of calibration directions to correspond to the number of pixels. The number of calibration directions may be smaller then the number of pixels or group of pixels. In such a case, the steering vectors of the pixels or group of pixels that are not associated with a calibration direction may be determined by interpolation.

As mentioned above, the correspondence between each steering vector with respective pixel or group of pixels may be determined computationally. To that end, the relative position between the receptors in the receptors array should be known. Furthermore, the wavelength of the signal (i.e., either the electromagnetic signal or the sound signal) in the medium should also be known. Consequently, the relative amplitudes and phases between the receptors of signals received from various directions can be determined.

In essence, the calibration procedures registers the coordinate system associated with the imaging sensor with a coordinate system associated with the 'measurement space' of the receptors array (i.e., the phase difference measurements or the complex received signals). Consequently, a mapping between these two coordinate systems is determined and each location in the measurement space is associated with respective 'location' (i.e., pixel) in the imaging sensor. As mentioned above, the spatial relation between the imager and the receptor array is fixed one with respect to the other, at least during the acquisition of the image and the reception of the signals. However, if this spatial relationship changes, the magnitude of this change (e.g., the translation and rotation) should be known and the calibration adjusted accordingly.

The above description related to a receptor array, which includes at least three receptors. However, it is noted that the disclosed technique is applicable to a receptor array, which includes at least two receptors as well. However, instead of marking a pixel, a system according to the disclosed technique, employing only two receptors shall mark a column of pixels or a line of pixels.

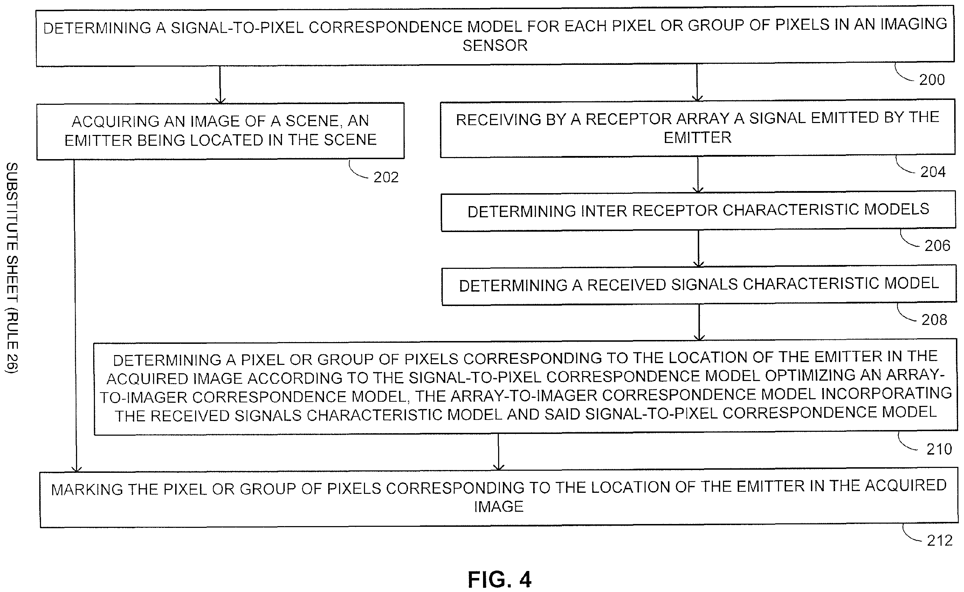

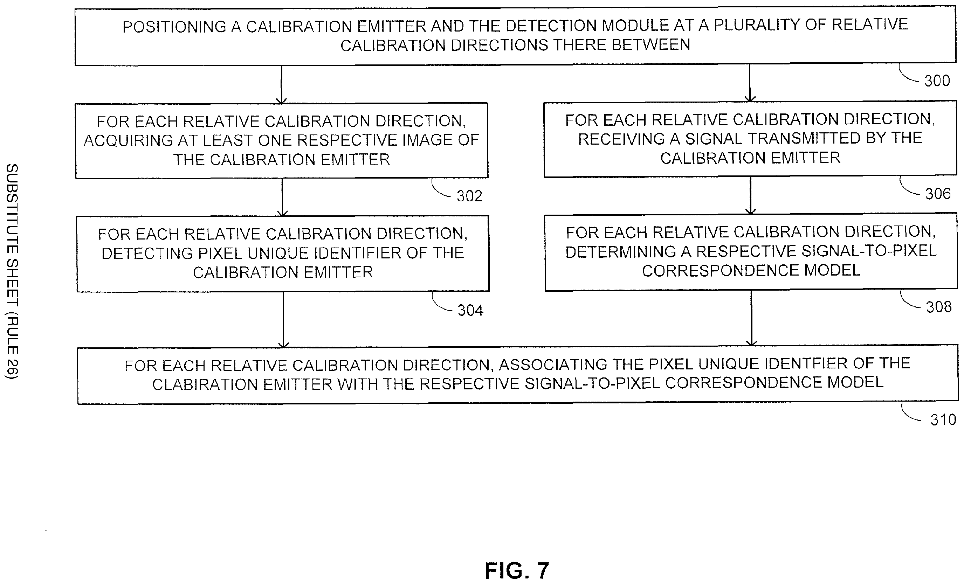

Reference is now made to Figure 4, which is a schematic illustration of a method for identifying an emitter in an image, operative in accordance with another embodiment of the disclosed technique. In procedure 200, a signal-to-pixel correspondence model is determined for each pixel or group of pixels in an imaging sensor. This correspondence is determined by a calibration process described herein above and herein below in conjunction with Figure 7 or by computation as also explained hereinabove. In the correlation-based technique, the signal-to-pixel correspondence model is a steering vector as in Equation (2). In the interferometer technique, the signal-to-pixel correspondence model is a vector of phase differences between selected pair of antennas in Equation (7). After procedure 200, the method proceeds to procedure 202 and to procedure 204.

In procedure 202, an image of a scene is acquired. An emitter is located in the scene. With reference to Figure 1, imager 102 acquires an image of a scene. After procedure 202, the method proceeds to procedure 210.

In procedure 204, a signal emitted by the emitter is received by a receptor array. The field of view of the receptor array at least partially overlaps with the field of view of the imager that acquired the image. With reference to Figure 1, receptors $104_1$, $104_2$ and $104_3$ receive a signal transmitted by an emitter.

In procedure 206, inter receptor characteristic models are determined. In the correlation-based technique, the inter receptor characteristic models are the correlations between each pair of received signals and between each received signal and itself as in Equation (3). In the interferometer technique, the receptor characteristic models are received difference measurements between the selected pairs of antennas. With reference to Figure 1, correlator 108 determines inter receptor characteristic models.

In procedure 208, a received signals characteristic model is determined. In the correlation-based technique, received signals characteristic model is a covariance matrix determined from the correlations between each pair of received signals and between each received signal and itself, for example, as in Equation (4). In the interferometer technique, the received signals characteristic model is a vector of received phase differences between selected pairs of antennas as in Equation (8) above. With reference to Figure 1, processor 110 determines a received signals characteristic model.

In Procedure 210, a pixel or group of pixels corresponding to the location of the emitter in the acquired image is determined according to the signal-to-pixel correspondence model optimizing an array-to-imager correspondence model. The array-to-imager correspondence model incorporates the received signals characteristic model and the signal-to-pixel correspondence model. In the correlation-based technique, the array-to-imager correspondence model is, for example, as in Equation (5) for the beamforming algorithm or Equation (6) for the MUSIC algorithm or as in equation (7) for the Capon algorithm. In the interferometer technique, the array-to-imager correspondence model is for example as in Equation (9). With reference to Figure 1, processor 110 determines a pixel or a group of pixels corresponding to the location of the emitter in the acquired image according to the signal-to-pixel correspondence model optimizing an array-to-imager correspondence model.

In procedure 212, the pixel corresponding to the location of the emitter in the acquired image is marked. The pixel of associated with the emitter is the pixel or pixels associated with the emitter. With reference to Figure 1, processor 110 marks the pixel corresponding to the location of the emitter in the acquired image.

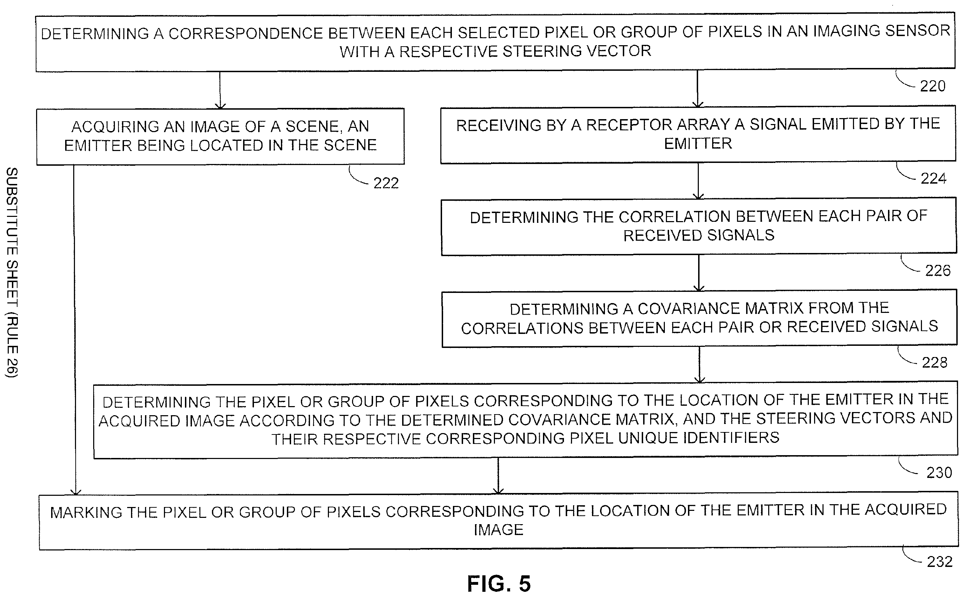

As described above, the pixel corresponding to the location of the emitter the image may also be determined employing correlation-based techniques. Reference is now made to Figure 5, which is a schematic illustration of a method for marking an emitter location on an image when employing correlation-based techniques, in accordance with a further embodiment of the disclosed technique. In procedure 220, a correspondence between each pixel or group of pixels in an imaging sensor, with a respective steering vector is determined. This correspondence is determined by a calibration process described herein above and herein below in conjunction with Figure 7 or by computation as also explained hereinabove. After procedure 220, the method proceeds to procedure 222 and to procedure 224.

In procedure 222, an image of a scene is acquired. An emitter is located in the scene. With reference to Figure 1, imager 102 acquires an image of a scene. After procedure 222, the method proceeds to procedure 232.

In procedure 224, a signal, emitted by the emitter, is received by a receptors array. The field of view of the receptor array at least partially overlaps with the field of view of the imager that acquired the image. With reference to Figure 1, receptors $104_1$, $104_2$ and $104_3$ receive a signal transmitted by an emitter.

In procedure 226, the correlation between each pair of received signals is determined and between each received signal and itself. With reference to Figure 1, correlator 108 determines the correlation between each pair of received signals.

In procedure 228, a covariance matrix is determined from the correlations between each pair or received signals. With reference to Figure 1, processor 110 determines a covariance matrix.

In procedure 230, the pixel or group of pixels, corresponding to the location of the emitter in the acquired image is determined according to the determined the covariance matrix and the steering vectors and their respective corresponding pixel unique identifiers. The pixel unique identifier may be determined according to the beamforming algorithm described herein above in conjunction with Equation (5) or according to the MUSIC algorithm described hereinabove in conjunction with Equation (6) or according to the Capon algorithm. With reference to Figure 1, processor 110 determines the pixel coordinates associated with the emitter.

In procedure 232, the pixel associated with the emitter is marked in the acquired image. The pixel of associated with the emitter is the pixel or pixels associated with the emitter. With reference to Figure 1, processor 110 marks the pixel associated with the emitter in the acquired image.

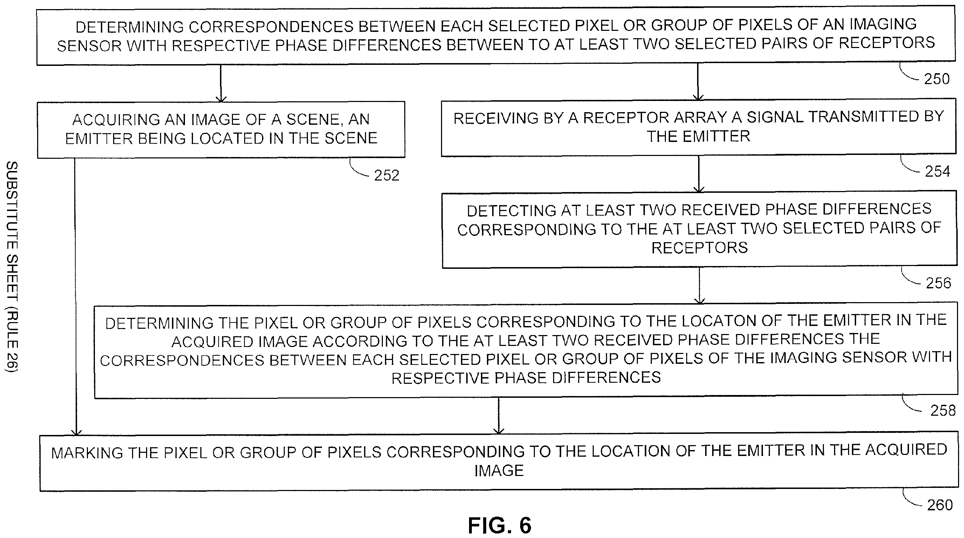

As mentioned above, the pixel corresponding to the location of the emitter in the image may be determined by employing the interferometer technique. Reference is now made to Figure 6, which is a schematic illustration of a method for marking an emitter location on an image when the interferometer technique is employed, in accordance with another embodiment of the disclosed technique. In procedure 250, a correspondences between each selected pixel or group of pixels of an imaging sensor with respective phase differences between to at least two selected pairs of receptors is determined. This correspondence is determined by a calibration process described herein above, and as described herein below in conjunction with Figure 7. After procedure 250, the method proceeds to procedure 252 and to procedure 254.

In procedure 252, an image of a scene is acquired. An emitter is located in the scene. With reference to Figure 1, imager 102 acquires an image of a scene. After procedure 252, the method proceeds to procedure 260.

In procedure 254, a signal, transmitted by the emitter, is received by a receptor array. The field of view of the receptor array at least partially overlaps with the field of view of the imager that acquired the image. With reference to Figure 1, receptors $104_1$, $104_2$ and $104_3$ receive a signal transmitted by an emitter.

In procedure 256, at least two received phase difference corresponding to the at least two selected pairs of receptors are detected. With reference to Figure 1, correlator 108 determines at least one of first phase difference and second phase difference.

In procedure 258, the pixel or group of pixel corresponding to the location the emitter in the acquired image is determined according to the at least two received phase differences, the correspondences between each selected pixel or group of pixels of the imaging sensor with respective phase differences. With reference to Figure 1, processor 110 determines the pixel associated with the emitter.

In procedure 260, the pixel or group of pixels corresponding to the location of the emitter in the acquired image is marked in the acquired image. The pixel of associated with the emitter is the pixel or pixels located at pixel coordinates associated with the emitter. With reference to Figure 1, processor 110 marks the pixel associated with the emitter in the acquired image.

Reference is now made to Figure 7, which is a schematic illustration of a method for determining a signal-to-pixel correspondence model in accordance with a further embodiment of the disclosed technique. When correlation-based techniques are employed, the correspondence vector is a steering vector as described above in conjunction with Equation (2). When the interferometer technique is employed, the correspondence vector is vector whose entries are phase difference measurements between at least two selected pairs of receptors. In procedure 300, a calibration emitter and the detection module are positioned at a plurality of relative calibration directions therebetween. Positioning the calibration emitter and the detection module in a plurality of relative calibration directions therebetween is achieved, for example, by moving the calibration emitter or the detection module through a plurality of calibration locations relative to each other. Alternatively, positioning the calibration emitter and detection module through a plurality of relative calibration directions therebetween is achieved by orienting the detection module though a plurality of calibration orientation relative to the calibration emitter. With reference to Figure 1, detection module 103 and a calibration emitter are positioned in a plurality of relative calibration directions therebetween. After procedure 300, the method proceeds to procedure 302 and 306

In procedure 302, for each relative calibration direction, at least one respective image of the calibration emitter is acquired. With reference to Figure 1, imager 102 acquires at least one image of the calibration emitter for each relative calibration direction.

In procedure 304, for each relative calibration direction, determining the pixel unique identifier (e.g., pixel coordinates or pixel number) of the calibration emitter. The pixels unique identifier of the calibration emitter in the acquired image are determined either automatically (e.g., with the aid of image processing techniques) or by a user. With reference to Figure 1, processor 110 determines the pixel coordinates of the calibration emitter. After procedure 304, the method proceeds to procedure 310.

In procedure 306, for each relative calibration direction, a signal transmitted by the calibration emitter is received. With reference to Figure 1, receptors $104_1$, $104_2$ and $104_3$ receive the signal transmitted by the calibration emitter. After procedure 304, the method proceeds to procedure 308.

In procedure 308, for each relative calibration direction, determining a respective signal-to-pixel correspondence model. When the correlation-based techniques are employed, the correspondence vector is a steering vector as described above as described above in conjunction with Equation (2). When the interferometer technique is employed, the signal-to-pixel correspondence model is vector whose entries are the phase differences measured during the calibration process between at least two selected pairs of receptors. With reference to Figure 1, correlator 108 determines signal-to-pixel correspondence model respective of each calibration direction.

In procedure 310, for each relative calibration direction, the respective calibration emitter pixel unique identifier is associated with the respective signal-to-pixel correspondence model. This correspondence may be in the form of a LUT or in the form of a function fitted to the determined correspondences. With reference to Figure 1, processor 110 the respective calibration emitter pixel coordinates with the respective correspondence vector.

The disclosed technique may be employed in various scenarios and applications. For example, in a disaster area (e.g., where earthquakes occurred, where a storm passed or where a tsunami hit), which includes collapsed buildings, a system according to the disclosed technique may be employed to locate cellphones corresponding to survivors trapped within the collapsed buildings and indicate on the acquired image the location of such survivors. As such, the system shall acquire an image of the disaster area or a part thereof and receive signals transmitted by these cellphones. The system identifies pixel or pixels corresponding to the cellphones and mark the pixel or pixels corresponding to these cellphones on the acquired image as described above. Such a marked image may give the user an indication regarding the location of the survivors in the scene. The user can than direct the rescue personal toward the location of the cellphones. Moreover, the system may identify a unique device identification number (e.g., Medium Access Control - MAC address, International Mobile Station Equipment Identity - IMEI number), which a mobile devices transmit un-encrypted and display these numbers on the acquired image near the marking corresponding to the detected emitter or save these numbers to a memory. These unique device identification numbers may aid in identifying the trapped persons by matching these numbers to the numbers registered at the service providers.

The disclosed technique may also be employed for security purposes. For example, imager 102 in detection module 103 may be employed as a security camera while the receptor array shall receive the signals emitted by the cellphones and mark the location of these cellphones in the acquired image. Similar to as described above, the system can identify a unique device identification number which the cellpohne transmit un-encrypted, display these numbers on the acquired image near the marking corresponding to the detected emitter or save these numbers to a memory, and employ these numbers to identifying the persons in the image. When the receptors in the receptors array are microphones, the system according to the disclosed technique may be employed, for example, for identifying talking people in a crowd.

It will be appreciated by persons skilled in the art that the disclosed technique is not limited to what has been particularly shown and described hereinabove. Rather the scope of the disclosed technique is defined only by the claims, which follow.

**Claims**

1.  A system for identifying the location of an emitter in an image, said emitter emitting a signal, said system comprising:

    a receptor array, including at least three receptors ($104_1$, $104_2$ and $104_3$), said at least three receptors ($104_1$, $104_2$ and $104_3$) being associated with a plane, each one of said at least three receptors ($104_1$, $104_2$ and $104_3$) receiving said signal and producing a respective received signal;
    an imager (102), including an imaging sensor, said imaging sensor includes a plurality of pixels, each pixel being associated with a pixel unique identifier, said imager being at a fixed spatial relationship relative to said receptor array, the field of view of said imager and the field of view of said receptor array at least partially overlap one with respect to the other;
    a multi-channel receiver (106), each receptor ($104_1$, $104_2$ and $104_3$) being coupled with a respective channel in said multi-channel receiver (106), said multi-channel receiver at least including a correlator (108), said correlator (108) determining inter-receptor characteristic models based on received signals at pairs of receptors; and
    a processor (110), coupled with said multi-channel receiver (106) and with said imager (102), said processor (110) determining a received signals characteristic model from said inter-receptor characteristic models,
    said system further being **characterized by** said processor (110) further determining a pixel corresponding to the location of said emitter in said image according to a signal-to-pixel correspondence model optimizing an array-to-imager correspondence model, said array-to-imager correspondence model incorporating said received signals characteristic model and said signal-to-pixel correspondence model, wherein said optimizing comprises determining arguments of the maxima or minima of a function incorporating said received signals characteristic model and said signal-to-pixel correspondence model, and wherein said signal-to-pixel correspondence model being pre-determined by a calibration process or computationally.

2.  The system according to claim 1, wherein said signal-to-pixel correspondence model is a steering vector associated with each of at least one pixel,

    wherein, said inter-receptor characteristic models are the correlations between the signals received by each pair of receptors and the correlation between the signal received by each receptor with itself,
    wherein said received signal characteristic model is a covariance matrix.

3.  The system according to claim 2, wherein said array-to-imager correspondence model is as follows:

$$[x,y] = \arg\max_{x,y} [\overline{w}_{x,y}^T R \overline{w}_{x,y}]$$

    wherein $\overline{w}_{x,y}$ denotes said steering vector associated with each of said at least one pixel, $R$ denotes said covariance matrix, $[x,y]$ denotes said pixel unique identifier and $T$ denotes the transpose operator.

4.  The system according to claim 2, wherein said array-to-imager correspondence model is as follows;

$$[x,y]_1^D = \arg\max_{x,y} \left[ \frac{1}{\overline{w}_{x,y}^T V_N V_N^T \overline{w}_{x,y}} \right]$$

    wherein $\overline{w}_{x,y}$ denotes said steering vector associated with each pixel of group of pixels, where $V_N$ represent the $K$ eigen vectors of said covariance matrix relating to the noise, $K+D$ equals the total number of eigen values of said covariance matrix, $[x,y]$ denotes said pixel unique identifier and $T$ denotes the transpose operator.

5.  The system according to claim 1, wherein said signal-to-pixel correspondence model is a vector of phase differences between selected pairs of antennas respectively, associated with each of said at least one pixel,

wherein, said inter-receptor characteristic models are received phase differences between the received signals produced by said selected pairs of receptors respectively,
wherein said received signal characteristic model is a vector of phase differences between said selected pairs of receptors, and
wherein said array-to-imager correspondence model is given by:

$$[x, y] = \underset{x,y}{arg\ min}([\Delta\phi_1^r, \Delta\phi_2^r, \ldots, \Delta\phi_M^r] - [\Delta\phi_1^{x,y}, \Delta\phi_2^{x,y}, \ldots, \Delta\phi_M^{x,y}])^2$$

wherein $\Delta\phi_m^{x,y}$ denotes the $m^{th}$ model phase difference and determined by a calibration process,

wherein, $\Delta\phi_m^r$ denotes the $m^{th}$ received phase difference and *[x,y]* denotes said pixel unique identifier.

6. The system according to claim 1, wherein said processor further marks said pixel corresponding to said emitter.

7. The system according to claim 6, further including a display, said processor displaying said image of said scene.

8. The system according to claim 1, wherein said signal-to-pixel correspondence model is determined by:

positioning a calibration emitter and the detection module at a plurality of relative calibration directions there between, said detection module includes said receptors array and said imager;
for each relative calibration direction, acquiring at least one respective image of said calibration emitter;
for each said relative calibration direction, detecting pixel unique identifier of said calibration emitter;
for each said relative calibration direction, receiving a signal transmitted by said calibration emitter;
for each said relative calibration direction, determining a respective signal-to-pixel correspondence model; and
for each said relative calibration direction, associating said pixel unique identifier of said calibration emitter with said respective signal-to-pixel correspondence model.

9. A method for identifying an emitter in an image, said emitter emitting a signal, said method comprising the procedures of:

acquiring by an imager an image of a scene, said emitter being located in said scene, the imager includes an imaging sensor, said imaging sensor includes a plurality of pixels, each pixel being associated with a pixel unique identifier, said imager being at a fixed spatial relationship relative to a receptor array, the field of view of said imager and the field of view of said receptor array at least partially overlap one with respect to the other;
receiving by the receptor array a signal emitted by said emitter, the receptor array includes at least three receptors for receiving said signal and producing a respective received signal;
determining inter-receptor characteristic models from the received signals based on received signals at pairs of receptors;
determining a received signals characteristic model from said inter-receptor characteristic models,
being **characterized in that** said method further includes the procedure of:
determining a pixel corresponding to the location of said emitter in said image according to a signal-to-pixel correspondence model optimizing an array-to-imager correspondence model, said array-to-imager correspondence model incorporating said received signals characteristic model and said signal-to-pixel correspondence model, wherein said optimizing comprises determining arguments of the maxima or minima of a function incorporating said received signals characteristic model and said signal-to-pixel correspondence model, and wherein said signal-to-pixel correspondence model being pre-determined by a calibration process or computationally.

10. The method according to claim 9, wherein said signal-to-pixel correspondence model is a steering vector associated with each of at least one pixel,

wherein, said inter-receptor characteristic models are the correlations between the signals received by each pair of receptors and the correlation between the signal received by each receptor with itself,
wherein said received signal characteristic model is a covariance matrix.

11. The method according to claim 10, wherein said array-to-imager correspondence model is as follows:

$$[x, y] = \underset{x,y}{arg\ max}\ [\overline{w}_{x,y}^{T} R \overline{w}_{x,y}]$$

wherein $\overline{w}_{x,y}$ denotes said steering vector associated with each of said at least one pixel, $R$ denotes said covariance matrix, $[x,y]$ denotes said pixel unique identifier and $T$ denotes the transpose operator.

**12.** The method according to claim 10, wherein said array-to-imager correspondence model is as follows;

$$[x, y]_{1}^{D} = \underset{x,y}{arg\ max}\left[\frac{1}{\overline{w}_{x,y}^{T} V_{N} V_{N}^{T} \overline{w}_{x,y}}\right]$$

wherein $\overline{w}_{x,y}$ denotes said steering vector associated with each pixel of group of pixels, where $V_{N}$ represent the $K$ eigen vectors of said covariance matrix relating to the noise, $K+D$ equals the total number of eigen values of said covariance matrix, $[x,y]$ denotes said pixel unique identifier and T denotes the transpose operator.

**13.** The method according to claim 9, wherein said signal-to-pixel correspondence model is a vector of phase differences between selected pairs of antennas respectively, associated with each of said at least one pixel,
wherein, said inter-receptor characteristic models are received phase differences between the received signals produced by said selected pairs of receptors respectively,
wherein said received signal characteristic model is a vector of phase differences between said selected pairs of receptors, and
wherein said array-to-imager correspondence model is given by:

$$[x, y] = \underset{x,y}{arg\ min}([\Delta\phi_{1}^{r}, \Delta\phi_{2}^{r}, \ldots, \Delta\phi_{M}^{r}] - [\Delta\phi_{1}^{x,y}, \Delta\phi_{2}^{x,y}, \ldots, \Delta\phi_{M}^{x,y}])^{2}$$

wherein $\Delta\phi_{m}^{x,y}$ denotes the m$^{th}$ model phase difference and determined by a calibration process,

wherein, $\Delta\phi_{m}^{r}$ denotes the m$^{th}$ received phase difference and $[x,y]$ denotes said pixel unique identifier.

**14.** The method according to claim 9, further includes the procedure of marking said pixel corresponding to said emitter on said image.

**15.** The method according to claim 9, wherein said procedure of determining a signal-to-pixel correspondence model includes the sub-procedures of:

positioning a calibration emitter and a detection module at a plurality of relative calibration directions there between, said detection module includes a receptor array and an imager;
for each relative calibration direction, acquiring at least one respective image of said calibration emitter;
for each said relative calibration direction, detecting pixel unique identifier of said calibration emitter;
for each said relative calibration direction, receiving a signal transmitted by said calibration emitter;
for each said relative calibration direction, determining a respective signal-to-pixel correspondence model; and
for each said relative calibration direction, associating said pixel unique identifier of said calibration emitter with said respective signal-to-pixel correspondence model.

**Patentansprüche**

**1.** System zum Identifizieren der Lage eines Emitters in einem Bild, wobei der Emitter ein Signal emittiert, wobei das System Folgendes umfasst:

einen Rezeptorarray, der wenigstens drei Rezeptoren ($104_1$, $104_2$ und $104_3$) beinhaltet, wobei die wenigstens drei Rezeptoren ($104_1$, $104_2$ und $104_3$) mit einer Ebene verknüpft sind, wobei jeder der wenigstens drei Rezep-

toren ($104_1$, $104_2$ und $104_3$) das Signal empfängt und ein entsprechendes empfangenes Signal erzeugt; einen Bildgeber (102), der einen Bildgebungssensor beinhaltet, wobei der Bildgebungssensor mehrere Pixel beinhaltet, wobei jedes Pixel mit einer eindeutigen Pixelkennung verknüpft ist, wobei der Bildgeber in einer festen räumlichen Beziehung relativ zu dem Rezeptorarray steht, wobei das Sichtfeld des Bildgebers und das Sichtfeld des Rezeptorarrays sich wenigstens teilweise in Bezug aufeinander überlappen; einen Mehrkanalempfänger (106), wobei jeder Rezeptor ($104_1$, $104_2$ und $104_3$) mit einem jeweiligen Kanal in dem Mehrkanalempfänger (106) gekoppelt ist, wobei der Mehrkanalempfänger wenigstens einen Korrelator (108) beinhaltet, wobei der Korrelator (108) Modelle für Interrezeptor-Merkmale basierend auf an Rezeptorpaaren empfangenen Signalen bestimmt; und

einen Prozessor (110), der mit dem Mehrkanalempfänger (106) und dem Bildgeber (102) gekoppelt ist, wobei der Prozessor (110) ein Modell für Merkmale empfangener Signale aus den Modellen für Interrezeptor-Merkmale bestimmt, wobei das System ferner **dadurch gekennzeichnet ist, dass** der Prozessor (110) ferner ein Pixel, das der Lage des Emitters in dem Bild entspricht, gemäß einem Signal-Pixel-Übereinstimmungsmodell bestimmt, das ein Array-Bildgeber-Übereinstimmungsmodell optimiert, wobei das Array-Bildgeber-Übereinstimmungsmodell das Modell für Merkmale empfangener Signale und das Signal-Pixel-Übereinstimmungsmodell integriert, wobei das Optimieren das Bestimmen von Argumenten der Maxima oder der Minima einer Funktion umfasst, die das Modell für Merkmale empfangener Signale und das Signal-Pixel-Übereinstimmungsmodell integriert, und wobei das Signal-Pixel-Übereinstimmungsmodell zuvor durch einen Kalibrierungsvorgang oder rechnerisch bestimmt wird.

2. System nach Anspruch 1, wobei das Signal-Pixel-Übereinstimmungsmodell ein Steuervektor ist, der mit jedem von wenigstens einem Pixel verknüpft ist, wobei es sich bei den Modellen für Interrezeptor-Merkmale um die Korrelationen zwischen den Signalen, die durch jedes Rezeptorpaar empfangen werden, und die Korrelation zwischen dem Signal, das durch jeden Rezeptor empfangen wird, mit sich selbst handelt, wobei das Modell für Merkmale empfangener Signale eine Kovarianzmatrix ist.

3. System nach Anspruch 2, wobei das Array-Bildgeber-Übereinstimmungsmodell wie folgt lautet:

$$[x, y] = \underset{x, y}{\arg max} \left[ \overline{w}_{x,y}^T R \overline{w}_{x,y} \right]$$

wobei $\overline{w}_{x,y}$ den Steuervektor bezeichnet, der mit jedem des wenigstens einen Pixels verknüpft ist, $R$ die Kovarianzmatrix bezeichnet, $[x, y]$ die eindeutige Pixelkennung bezeichnet und T den Transponierungsoperator bezeichnet.

4. System nach Anspruch 2, wobei das Array-Bildgeber-Übereinstimmungsmodell wie folgt lautet:

$$[x, y]_1^D = \underset{x, y}{\arg max} \left[ \frac{1}{\overline{w}_{x,y}^T V_N V_N^T \overline{w}_{x,y}} \right]$$

wobei $\overline{w}_{x,y}$ den Steuervektor bezeichnet, der mit jedem Pixel einer Pixelgruppe verknüpft ist, wobei $V_N$ die $K$ Eigenvektoren der Kovarianzmatrix darstellt, die sich auf das Rauschen beziehen, $K+D$ gleich der Gesamtzahl der Eigenwerte der Kovarianzmatrix ist, $[x, y]$ die eindeutige Pixelkennung bezeichnet und $T$ den Transponierungsoperator bezeichnet.

5. System nach Anspruch 1, wobei das Signal-Pixel-Übereinstimmungsmodell ein Vektor von Phasendifferenzen jeweils zwischen ausgewählten Antennenpaaren ist, die mit jedem des wenigstens einen Pixels verknüpft sind, wobei die Modelle für Interrezeptor-Merkmale empfangene Phasendifferenzen zwischen den empfangenen Signalen sind, die jeweils durch die ausgewählten Rezeptorpaare erzeugt werden, wobei das Modell für Merkmale empfangener Signale ein Vektor von Phasendifferenzen zwischen den ausgewählten Rezeptorpaaren ist und wobei das Array-Bildgeber-Übereinstimmungsmodell durch Folgendes gegeben ist:

$$[x, y] = \arg\min_{x, y}\left(\left[\Delta\phi_1^r, \Delta\phi_2^r \ldots \Delta\phi_M^r\right] - \left[\Delta\phi_1^{x,y}, \Delta\phi_2^{x,y} \ldots \Delta\phi_M^{x,y}\right]\right)^2$$

wobei $\Delta\phi_m^{x,y}$ die m-te Modellphasendifferenz bezeichnet und durch einen Kalibrierungsvorgang bestimmt wird,

wobei $\Delta\phi_m^r$ die m-te empfangene Phasendifferenz bezeichnet und *[x, y]* die eindeutige Pixelkennung bezeichnet.

6. System nach Anspruch 1, wobei der Prozessor ferner das Pixel markiert, das dem Emitter entspricht.

7. System nach Anspruch 6, das ferner eine Anzeige beinhaltet, wobei der Prozessor das Bild der Szene anzeigt.

8. System nach Anspruch 1, wobei das Signal-Pixel-Übereinstimmungsmodell durch Folgendes bestimmt wird:

Positionieren eines Kalibrierungsemitters und des Ermittlungsmoduls an mehreren relativen Kalibrierungsrichtungen dazwischen, wobei das Ermittlungsmodul den Rezeptorarray und den Bildgeber beinhaltet;
für jede relative Kalibrierungsrichtung, Erfassen wenigstens eines jeweiligen Bildes des Kalibrierungsemitters;
für jede relative Kalibrierungsrichtung, Ermitteln der eindeutigen Pixelkennung des Kalibrierungsemitters;
für jede relative Kalibrierungsrichtung, Empfangen eines Signals, das durch den Kalibrierungsemitter übertragen wird;
für jede relative Kalibrierungsrichtung, Bestimmen eines jeweiligen Signal-Pixel-Übereinstimmungsmodells; und
für jede relative Kalibrierungsrichtung, Verknüpfen der eindeutigen Pixelkennung des Kalibrierungsemitters mit dem jeweiligen Signal-Pixel-Übereinstimmungsmodell.

9. Verfahren zum Identifizieren eines Emitters in einem Bild, wobei der Emitter ein Signal emittiert, wobei das Verfahren die folgenden Vorgehensweisen umfasst:

Erfassen, durch einen Bildgeber, ein Bild einer Szene, wobei sich der Emitter in der Szene befindet, wobei der Bildgeber einen Bildgebungssensor beinhaltet, wobei der Bildgebungssensor mehrere Pixel beinhaltet, wobei jedes Pixel mit einer eindeutigen Pixelkennung verknüpft ist, wobei der Bildgeber in einer festen räumlichen Beziehung relativ zu einem Rezeptorarray steht, wobei das Sichtfeld des Bildgebers und das Sichtfeld des Rezeptorarrays sich wenigstens teilweise in Bezug aufeinander überlappen;
Empfangen, durch den Rezeptorarray, eines Signals, das durch den Emitter emittiert wird, wobei der Rezeptorarray wenigstens drei Rezeptoren zum Empfangen des Signals und zum Erzeugen eines jeweiligen empfangenen Signals beinhaltet;
Bestimmen von Modellen für Interrezeptor-Merkmale aus den empfangenen Signalen basierend auf an Rezeptorpaaren empfangenen Signalen;
Bestimmen eines Modells für Merkmale empfangener Signale aus den Modellen für Interrezeptor-Merkmale, das **dadurch gekennzeichnet ist, dass** das Verfahren ferner die folgende Vorgehensweise beinhaltet:
Bestimmen eines Pixels, das der Lage des Emitters in dem Bild entspricht, gemäß einem Signal-Pixel-Übereinstimmungsmodell, das ein Array-Bildgeber-Übereinstimmungsmodell optimiert, wobei das Array-Bildgeber-Übereinstimmungsmodell das Modell für Merkmale empfangener Signale und das Signal-Pixel-Übereinstimmungsmodell integriert, wobei das Optimieren das Bestimmen von Argumenten der Maxima oder der Minima einer Funktion umfasst, die das Modell für Merkmale empfangener Signale und das Signal-Pixel-Übereinstimmungsmodell integriert, und wobei das Signal-Pixel-Übereinstimmungsmodell zuvor durch einen Kalibrierungsvorgang oder rechnerisch bestimmt wird.

10. Verfahren nach Anspruch 9, wobei das Signal-Pixel-Übereinstimmungsmodell ein Steuervektor ist, der mit jedem von wenigstens einem Pixel verknüpft ist, wobei es sich bei den Modellen für Interrezeptor-Merkmale um die Korrelationen zwischen den Signalen, die durch jedes Rezeptorpaar empfangen werden, und die Korrelation zwischen dem Signal, das durch jeden Rezeptor empfangen wird, mit sich selbst handelt,
wobei das Modell für Merkmale empfangener Signale eine Kovarianzmatrix ist.

11. Verfahren nach Anspruch 10, wobei das Array-Bildgeber-Übereinstimmungsmodell wie folgt lautet:

$$[x,y] = \underset{x,y}{\arg\,max} \left[ \overline{w}_{x,y}^T R \overline{w}_{x,y} \right]$$

wobei $\overline{w}_{x,y}$ den Steuervektor bezeichnet, der mit jedem des wenigstens einen Pixels verknüpft ist, *R* die Kovarianzmatrix bezeichnet, *[x, y]* die eindeutige Pixelkennung bezeichnet und T den Transponierungsoperator bezeichnet.

**12.** Verfahren nach Anspruch 10, wobei das Array-Bildgeber-Übereinstimmungsmodell wie folgt lautet:

$$[x,y]_1^D = \underset{x,y}{\arg\,max} \left[ \frac{1}{\overline{w}_{x,y}^T V_N V_N^T \overline{w}_{x,y}} \right]$$

wobei $\overline{w}_{x,y}$ den Steuervektor bezeichnet, der mit jedem Pixel einer Pixelgruppe verknüpft ist, wobei $V_N$ die K Eigenvektoren der Kovarianzmatrix darstellt, die sich auf das Rauschen beziehen, *K+D* gleich der Gesamtzahl der Eigenwerte der Kovarianzmatrix ist, *[x, y]* die eindeutige Pixelkennung bezeichnet und T den Transponierungsoperator bezeichnet.

**13.** Verfahren nach Anspruch 9, wobei das Signal-Pixel-Übereinstimmungsmodell ein Vektor von Phasendifferenzen jeweils zwischen ausgewählten Antennenpaaren ist, die mit jedem des wenigstens einen Pixels verknüpft sind, wobei die Modelle für Interrezeptor-Merkmale empfangene Phasendifferenzen zwischen den empfangenen Signalen sind, die jeweils durch die ausgewählten Rezeptorpaare erzeugt werden, wobei das Modell für Merkmale empfangener Signale ein Vektor von Phasendifferenzen zwischen den ausgewählten Rezeptorpaaren ist und wobei das Array-Bildgeber-Übereinstimmungsmodell durch Folgendes gegeben ist:

$$[x,y] = \underset{x,y}{\arg\,min} \left( \left[ \Delta\phi_1^r, \Delta\phi_2^r \dots \Delta\phi_M^r \right] - \left[ \Delta\phi_1^{x,y}, \Delta\phi_2^{x,y} \dots \Delta\phi_M^{x,y} \right] \right)^2$$

wobei $\Delta\phi_m^{x,y}$ die m-te Modellphasendifferenz bezeichnet und durch einen Kalibrierungsvorgang bestimmt wird,

wobei $\Delta\phi_m^r$ die m-te empfangene Phasendifferenz bezeichnet und *[x, y]* die eindeutige Pixelkennung bezeichnet.

**14.** Verfahren nach Anspruch 9, das ferner die Vorgehensweise zum Markieren des Pixels beinhaltet, das dem Emitter auf dem Bild entspricht.

**15.** Verfahren nach Anspruch 9, wobei das Verfahren zum Bestimmen eines Signal-Pixel-Übereinstimmungsmodells die folgenden Untervorgehensweisen beinhaltet:

Positionieren eines Kalibrierungsemitters und eines Ermittlungsmoduls an mehreren relativen Kalibrierungsrichtungen dazwischen, wobei das Ermittlungsmodul einen Rezeptorarray und einen Bildgeber beinhaltet;
für jede relative Kalibrierungsrichtung, Erfassen wenigstens eines jeweiligen Bildes des Kalibrierungsemitters;
für jede relative Kalibrierungsrichtung, Ermitteln der eindeutigen Pixelkennung des Kalibrierungsemitters;
für jede relative Kalibrierungsrichtung, Empfangen eines Signals, das durch den Kalibrierungsemitter übertragen wird;
für jede relative Kalibrierungsrichtung, Bestimmen eines jeweiligen Signal-Pixel-Übereinstimmungsmodells; und
für jede relative Kalibrierungsrichtung, Verknüpfen der eindeutigen Pixelkennung des Kalibrierungsemitters mit dem jeweiligen Signal-Pixel-Übereinstimmungsmodell.

**Revendications**

**1.** Système destiné à identifier l'emplacement d'un émetteur dans une image, ledit émetteur émettant un signal, ledit système comprenant :

un réseau de récepteurs, comportant au moins trois récepteurs ($104_1$, $104_2$ et $104_3$), lesdits au moins trois récepteurs ($104_1$, $104_2$ et $104_3$) étant associés à un plan, chacun desdits au moins trois récepteurs ($104_1$, $104_2$ et $104_3$) recevant ledit signal et produisant un signal reçu respectif ;
un imageur (102), comportant un capteur d'imagerie, ledit capteur d'imagerie comportant une pluralité de pixels, chaque pixel étant associé à un identifiant unique de pixel, ledit imageur étant dans une relation spatiale fixe par rapport audit réseau de récepteurs, le champ de vision dudit imageur et le champ de vision dudit réseau de récepteurs se chevauchant au moins partiellement l'un par rapport à l'autre ;
un récepteur multicanal (106), chaque récepteur ($104_1$, $104_2$ et $104_3$) étant couplé à un canal respectif dans ledit récepteur multicanal (106), ledit récepteur multicanal comportant au moins un corrélateur (108), ledit corrélateur (108) déterminant des modèles de caractéristiques interrécepteurs sur la base de signaux reçus au niveau de paires de récepteurs ; et
un processeur (110), couplé audit récepteur multicanal (106) et audit imageur (102), ledit processeur (110) déterminant un modèle de caractéristiques de signaux reçus à partir desdits modèles de caractéristiques interrécepteurs, ledit système étant en outre **caractérisé par** ledit processeur (110) déterminant en outre un pixel correspondant à l'emplacement dudit émetteur dans ladite image selon un modèle de correspondance signal-pixel optimisant un modèle de correspondance réseau-imageur, ledit modèle de correspondance réseau-imageur incorporant ledit modèle de caractéristiques de signaux reçus et ledit modèle de correspondance signal-pixel, ladite optimisation comprenant la détermination d'arguments des maxima ou minima d'une fonction incorporant ledit modèle de caractéristiques de signaux reçus et ledit modèle de correspondance signal-pixel, et ledit modèle de correspondance signal-pixel étant prédéterminé par un processus d'étalonnage ou par calcul.

2. Système selon la revendication 1, dans lequel ledit modèle de correspondance signal-pixel est un vecteur de direction associé à chacun d'au moins un pixel, lesdits modèles de caractéristiques interrécepteurs étant les corrélations entre les signaux reçus par chaque paire de récepteurs et la corrélation entre le signal reçu par chaque récepteur avec lui-même, ledit modèle de caractéristiques de signaux reçus étant une matrice de covariance.

3. Système selon la revendication 2, dans lequel ledit modèle de correspondance réseau-imageur est le suivant :

$$[x,y] = \arg\max_{x,y}\left[\overline{w}_{x,y}^T R \overline{w}_{x,y}\right]$$

où $\overline{w}_{x,y}$ désigne ledit vecteur directeur associé à chacun desdits au moins un pixel, $R$ désigne ladite matrice de covariance, $[x, y]$ désigne ledit identifiant unique de pixel et $T$ désigne l'opérateur de transposition.

4. Système selon la revendication 2, dans lequel ledit modèle de correspondance réseau-imageur est le suivant ;

$$[x,y]_1^D = \arg\max_{x,y}\left[\frac{1}{\overline{w}_{x,y}^T V_N V_N^T \overline{w}_{x,y}}\right]$$

où $\overline{w}_{x,y}$ désigne ledit vecteur directeur associé à chaque pixel d'un groupe de pixels, où $V_N$ représente les $K$ vecteurs propres de ladite matrice de covariance relatifs au bruit, $K + D$ est égal au nombre total de valeurs propres de ladite matrice de covariance, $[x, y]$ désigne ledit identifiant unique de pixel et $T$ désigne l'opérateur de transposition.

5. Système selon la revendication 1, dans lequel ledit modèle de correspondance signal-pixel est un vecteur de différences de phase entre des paires d'antennes sélectionnées respectivement, associé à chacun desdits au moins un pixel, lesdits modèles de caractéristiques interrécepteurs étant reçus en différences de phase entre les signaux reçus produits par lesdites paires sélectionnées de récepteurs respectivement, ledit modèle de caractéristiques de signaux reçus étant un vecteur de différences de phase entre lesdites paires sélectionnées de récepteurs, et ledit modèle de correspondance réseau-imageur étant donné par :

$$[x, y] = \underset{x, y}{\arg \min}\left(\left[\Delta\phi_1^r, \Delta\phi_2^r \dots \Delta\phi_M^r\right] - \left[\Delta\phi_1^{x,y}, \Delta\phi_2^{x,y} \dots \Delta\phi_M^{x,y}\right]\right)^2$$

où $\Delta\phi_m^{x,y}$ désigne la m$^{\text{ème}}$ différence de phase du modèle et déterminée par un processus d'étalonnage,

où $\Delta\phi_m^r$ désigne la m$^{\text{ème}}$ différence de phase reçue et *[x, y]* désigne ledit identifiant unique de pixel.

6. Système selon la revendication 1, dans lequel ledit processeur marque en outre ledit pixel correspondant audit émetteur.

7. Système selon la revendication 6, comportant en outre un affichage, ledit processeur affichant ladite image de ladite scène.

8. Système selon la revendication 1, dans lequel ledit modèle de correspondance signal-pixel est déterminé par :

le positionnement d'un émetteur d'étalonnage et du module de détection au niveau d'une pluralité de directions d'étalonnage relatives entre eux, ledit module de détection comportant ledit réseau de récepteurs et ledit imageur ;
pour chaque direction d'étalonnage relative, l'acquisition d'au moins une image respective dudit émetteur d'étalonnage ;
pour chacune desdites directions d'étalonnage relatives, la détection d'un identifiant unique de pixel dudit émetteur d'étalonnage ;
pour chacune desdites directions d'étalonnage relatives, la réception d'un signal émis par ledit émetteur d'étalonnage ;
pour chacune desdites directions d'étalonnage relatives, la détermination d'un modèle de correspondance signal-pixel respectif ; et
pour chacune desdites directions d'étalonnage relatives, l'association dudit identifiant unique de pixel dudit émetteur d'étalonnage audit modèle de correspondance signal-pixel respectif.

9. Procédé destiné à identifier un émetteur dans une image, ledit émetteur émettant un signal, ledit procédé comprenant les procédures :

d'acquisition, par un imageur, d'une image d'une scène, ledit émetteur étant situé dans ladite scène, l'imageur comportant un capteur d'imagerie, ledit capteur d'imagerie comportant une pluralité de pixels, chaque pixel étant associé à un identifiant unique de pixel, ledit imageur étant au niveau d'une relation spatiale fixe par rapport à un réseau de récepteurs, le champ de vision dudit imageur et le champ de vision dudit réseau de récepteurs se chevauchant au moins partiellement l'un par rapport à l'autre ;
de réception, par le réseau de récepteurs, d'un signal émis par ledit émetteur, le réseau de récepteurs comportant au moins trois récepteurs destinés à recevoir ledit signal et la production d'un signal reçu respectif ;
de détermination des modèles de caractéristiques interrécepteurs à partir des signaux reçus sur la base des signaux reçus au niveau de paires de récepteurs ;
de détermination d'un modèle de caractéristiques de signaux reçus à partir desdits modèles de caractéristiques interrécepteurs, étant **caractérisé en ce que** ledit procédé comporte en outre la procédure :
de détermination d'un pixel correspondant à l'emplacement dudit émetteur dans ladite image selon un modèle de correspondance signal-pixel optimisant un modèle de correspondance réseau-imageur, ledit modèle de correspondance réseau-imageur incorporant ledit modèle caractéristique de signaux reçus et ledit modèle de correspondance signal-pixel, ladite optimisation comprenant la détermination d'arguments des maxima ou minima d'une fonction incorporant ledit modèle caractéristiques de signaux reçus et ledit modèle de correspondance signal-pixel, et ledit modèle de correspondance signal-pixel étant prédéterminé par un processus d'étalonnage ou par calcul.

10. Procédé selon la revendication 9, dans lequel ledit modèle de correspondance signal-pixel est un vecteur directeur associé à chacun d'au moins un pixel, lesdits modèles de caractéristiques interrécepteurs étant les corrélations entre les signaux reçus par chaque paire de récepteurs et la corrélation entre le signal reçu par chaque récepteur avec lui-même, ledit modèle de caractéristiques de signaux reçus étant une matrice de covariance.

**11.** Procédé selon la revendication 10, dans lequel ledit modèle de correspondance réseau-imageur est le suivant :

$$[x,y] = \underset{x,y}{\arg\ max}\left[\overline{w}_{x,y}^T R \overline{w}_{x,y}\right]$$

où $\overline{w}_{x,y}$ désigne ledit vecteur directeur associé à chacun desdits au moins un pixel, $R$ désigne ladite matrice de covariance, *[x, y]* désigne ledit identifiant unique de pixel et $T$ désigne l'opérateur de transposition.

**12.** Procédé selon la revendication 10, dans lequel ledit modèle de correspondance réseau-imageur est le suivant ;

$$[x,y]_1^D = \underset{x,y}{\arg\ max}\left[\frac{1}{\overline{w}_{x,y}^T V_N V_N^T \overline{w}_{x,y}}\right]$$

où $\overline{w}_{x,y}$ désigne ledit vecteur directeur associé à chaque pixel d'un groupe de pixels, où $V_N$ représente les $K$ vecteurs propres de ladite matrice de covariance relatifs au bruit, $K + D$ est égal au nombre total de valeurs propres de ladite matrice de covariance, *[x, y]* désigne ledit identifiant unique de pixel et $T$ désigne l'opérateur de transposition.

**13.** Procédé selon la revendication 9, dans lequel ledit modèle de correspondance signal-pixel est un vecteur de différences de phase entre des paires d'antennes sélectionnées respectivement, associé à chacun desdits au moins un pixel, lesdits modèles de caractéristiques interrécepteurs étant reçus en différences de phase entre les signaux reçus produits par lesdites paires sélectionnées de récepteurs respectivement, ledit modèle caractéristiques de signaux reçus étant un vecteur de différences de phase entre lesdites paires sélectionnées de récepteurs, et ledit modèle de correspondance réseau-imageur étant donné par :

$$[x,y] = \underset{x,y}{\arg\ min}\left(\left[\Delta\phi_1^r, \Delta\phi_2^r \dots \Delta\phi_M^r\right] - \left[\Delta\phi_1^{x,y}, \Delta\phi_2^{x,y} \dots \Delta\phi_M^{x,y}\right]\right)^2$$

où $\Delta\phi_m^{x,y}$ désigne la m$^{\text{ème}}$ différence de phase du modèle et déterminée par un processus d'étalonnage,

où, $\Delta\phi_m^r$ désigne la m$^{\text{ème}}$ différence de phase reçue et *[x, y]* désigne ledit identifiant unique de pixel.

**14.** Procédé selon la revendication 9, comportant en outre la procédure de marquage dudit pixel correspondant audit émetteur sur ladite image.

**15.** Procédé selon la revendication 9, dans lequel ladite procédure de détermination d'un modèle de correspondance signal-pixel comporte les sous-procédures :

de positionnement d'un émetteur d'étalonnage d'un module de détection au niveau d'une pluralité de directions d'étalonnage relatives entre eux, ledit module de détection comportant un réseau de récepteurs et un imageur ;
pour chaque direction d'étalonnage relative, d'acquisition d'au moins une image respective dudit émetteur d'étalonnage ;
pour chacune desdites directions d'étalonnage relatives, de détection d'un identifiant unique de pixel dudit émetteur d'étalonnage ;
pour chacune desdites directions d'étalonnage relatives, de réception d'un signal émis par ledit émetteur d'étalonnage ;
pour chacune desdites directions d'étalonnage relatives, de détermination d'un modèle de correspondance signal-pixel respectif ; et
pour chacune desdites directions d'étalonnage relatives, d'association dudit identifiant unique de pixel dudit émetteur d'étalonnage audit modèle de correspondance signal-pixel respectif.

FIG. 1

EP 3 325 993 B1

EP 3 325 993 B1

VERTICAL PIXELS
COORDINATES

HORIZONTAL PIXELS
COORDINATES

**FIG. 2**

FIG. 3A

FIG. 3B

FIG. 3C

SUBSTITUTE SHEET (RULE 26)

EP 3 325 993 B1

SUBSTITUTE SHEET (RULE 26)

EP 3 325 993 B1

DETERMINING A SIGNAL-TO-PIXEL CORRESPONDENCE MODEL FOR EACH PIXEL OR GROUP OF PIXELS IN AN IMAGING SENSOR

200

ACQUIRING AN IMAGE OF A SCENE, AN EMITTER BEING LOCATED IN THE SCENE

202

RECEIVING BY A RECEPTOR ARRAY A SIGNAL EMITTED BY THE EMITTER

204

DETERMINING INTER RECEPTOR CHARACTERISTIC MODELS

206

DETERMINING A RECEIVED SIGNALS CHARACTERISTIC MODEL

208

DETERMINING A PIXEL OR GROUP OF PIXELS CORRESPONDING TO THE LOCATION OF THE EMITTER IN THE ACQUIRED IMAGE ACCORDING TO THE SIGNAL-TO-PIXEL CORRESPONDENCE MODEL OPTIMIZING AN ARRAY-TO-IMAGER CORRESPONDENCE MODEL, THE ARRAY-TO-IMAGER CORRESPONDENCE MODEL INCORPORATING THE RECEIVED SIGNALS CHARACTERISTIC MODEL AND SAID SIGNAL-TO-PIXEL CORRESPONDENCE MODEL

210

MARKING THE PIXEL OR GROUP OF PIXELS CORRESPONDING TO THE LOCATION OF THE EMITTER IN THE ACQUIRED IMAGE

212

**FIG. 4**

SUBSTITUTE SHEET (RULE 26)

DETERMINING A CORRESPONDENCE BETWEEN EACH SELECTED PIXEL OR GROUP OF PIXELS IN AN IMAGING SENSOR WITH A RESPECTIVE STEERING VECTOR

220

ACQUIRING AN IMAGE OF A SCENE, AN EMITTER BEING LOCATED IN THE SCENE

222

RECEIVING BY A RECEPTOR ARRAY A SIGNAL EMITTED BY THE EMITTER

224

DETERMINING THE CORRELATION BETWEEN EACH PAIR OF RECEIVED SIGNALS

226

DETERMINING A COVARIANCE MATRIX FROM THE CORRELATIONS BETWEEN EACH PAIR OR RECEIVED SIGNALS

228

DETERMINING THE PIXEL OR GROUP OF PIXELS CORRESPONDING TO THE LOCATION OF THE EMITTER IN THE ACQUIRED IMAGE ACCORDING TO THE DETERMINED COVARIANCE MATRIX, AND THE STEERING VECTORS AND THEIR RESPECTIVE CORRESPONDING PIXEL UNIQUE IDENTIFIERS

230

MARKING THE PIXEL OR GROUP OF PIXELS CORRESPONDING TO THE LOCATION OF THE EMITTER IN THE ACQUIRED IMAGE

232

**FIG. 5**

DETERMINING CORRESPONDENCES BETWEEN EACH SELECTED PIXEL OR GROUP OF PIXELS OF AN IMAGING SENSOR WITH RESPECTIVE PHASE DIFFERENCES BETWEEN TO AT LEAST TWO SELECTED PAIRS OF RECEPTORS

250

ACQUIRING AN IMAGE OF A SCENE, AN EMITTER BEING LOCATED IN THE SCENE

252

RECEIVING BY A RECEPTOR ARRAY A SIGNAL TRANSMITTED BY THE EMITTER

254

DETECTING AT LEAST TWO RECEIVED PHASE DIFFERENCES CORRESPONDING TO THE AT LEAST TWO SELECTED PAIRS OF RECEPTORS

256

DETERMINING THE PIXEL OR GROUP OF PIXELS CORRESPONDING TO THE LOCATON OF THE EMITTER IN THE ACQUIRED IMAGE ACCORDING TO THE AT LEAST TWO RECEIVED PHASE DIFFERENCES THE CORRESPONDENCES BETWEEN EACH SELECTED PIXEL OR GROUP OF PIXELS OF THE IMAGING SENSOR WITH RESPECTIVE PHASE DIFFERENCES

258

MARKING THE PIXEL OR GROUP OF PIXELS CORRESPONDING TO THE LOCATION OF THE EMITTER IN THE ACQUIRED IMAGE

260

## FIG. 6

SUBSTITUTE SHEET (RULE 26)

EP 3 325 993 B1

**FIG. 7**

300 — POSITIONING A CALIBRATION EMITTER AND THE DETECTION MODULE AT A PLURALITY OF RELATIVE CALIBRATION DIRECTIONS THERE BETWEEN

302 — FOR EACH RELATIVE CALIBRATION DIRECTION, ACQUIRING AT LEAST ONE RESPECTIVE IMAGE OF THE CALIBRATION EMITTER

304 — FOR EACH RELATIVE CALIBRATION DIRECTION, DETECTING PIXEL UNIQUE IDENTIFIER OF THE CALIBRATION EMITTER

306 — FOR EACH RELATIVE CALIBRATION DIRECTION, RECEIVING A SIGNAL TRANSMITTED BY THE CALIBRATION EMITTER

308 — FOR EACH RELATIVE CALIBRATION DIRECTION, DETERMINING A RESPECTIVE SIGNAL-TO-PIXEL CORRESPONDENCE MODEL

310 — FOR EACH RELATIVE CALIBRATION DIRECTION, ASSOCIATING THE PIXEL UNIQUE IDENTFIER OF THE CLABIRATION EMITTER WITH THE RESPECTIVE SIGNAL-TO-PIXEL CORRESPONDENCE MODEL

SUBSTITUTE SHEET (RULE 26)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011158233 PCT, Maor

- EP 2696213 A, Oakley